# EUROPEAN PATENT APPLICATION

(11) **EP 4 845 256 A1**
(43) Date of publication of application: **25.11.2026**
(21) Application number: 25751111.3
(22) Date of filing: 16.01.2025
(51) Int. Cl.: H04W 72/04, H04W 72/12

(54) **COMMUNICATION METHOD AND APPARATUS**

(30) Priority: 07.02.2024 CN 202410175963
(71) Applicant: Huawei Technologies Co., Ltd., Shenzhen, Guangdong 518129 (CN)
(72) Inventor: FAN, Liangliang, Shenzhen, Guangdong 518129 (CN); XU, Haibo, Shenzhen, Guangdong 518129 (CN); YAO, Chuting, Shenzhen, Guangdong 518129 (CN); ZHENG, Haina, Shenzhen, Guangdong 518129 (CN)
(74) Representative: Huawei European IPR
(86) International application number: PCT/CN2025/072735
(87) International publication number: WO 2025/167509

(57) **Abstract**

This application discloses a communication method and apparatus, and relates to the communication field. The method includes: receiving first configuration information from an access network device, where the first configuration information indicates a first time-frequency resource; and when there is to-be-transmitted uplink data, and a location distance between a first location of a terminal device at a first moment and a second location corresponding to a serving cell is less than a first distance threshold, and/or a signal strength of the serving cell is greater than a first signal strength threshold, sending the uplink data on the first time-frequency resource, where the first moment is an arrival moment of the uplink data or first target time corresponding to the first time-frequency resource. **In** this application, the terminal device may send the uplink data by using the first time-frequency resource indicated by the access network device, without performing random access, thereby reducing signaling overheads and a transmission delay, and increasing an uplink data capacity. The first time-frequency resource is a shared common time-frequency resource for different terminal devices, so that resource utilization is high, and a transmission capacity of a communication system can be increased.

## Description

This application claims priority to Chinese Patent Application No. 202410175963.9, filed on February 7, 2024 and entitled "COMMUNICATION METHOD AND APPARATUS", which is incorporated herein by reference in its entirety.

### TECHNICAL FIELD

This application relates to the communication field, and in particular, to a communication method and apparatus.

### BACKGROUND

In 5G new radio (new radio, NR), user equipment (user equipment, UE) may have three radio resource control (radio resource control, RRC) states: an RRC connected state, an RRC idle (idle) state, and an RRC inactive (inactive) state. Generally, when the UE in the RRC idle state needs to perform transmission of uplink data, the UE needs to first initiate an RRC connection setup (RRC connection setup) process to enter the RRC connected state, and then performs transmission after entering the RRC connected state.

However, when the UE needs to transmit a small data packet, signaling overheads consumed for entering the RRC connected state may be greater than an amount of data that needs to be transmitted, resulting in extremely low efficiency.

### SUMMARY

This application provides a communication method and apparatus, so that a terminal device can send uplink data by using a first time-frequency resource indicated by an access network device, without performing random access, to reduce signaling overheads and a transmission delay, and increase an uplink data capacity. The first time-frequency resource is a shared common time-frequency resource for different terminal devices, so that resource utilization is higher, and a transmission capacity of a communication system can be increased.

According to a first aspect, this application provides a communication method. The method includes: receiving first configuration information from an access network device, where the first configuration information indicates a first time-frequency resource; and when there is to-be-transmitted uplink data, and a location distance between a first location of a terminal device at a first moment and a second location corresponding to a serving cell is less than a first distance threshold, and/or a signal strength of the serving cell is greater than a first signal strength threshold, sending the uplink data on the first time-frequency resource, where the first moment is an arrival moment of the uplink data or first target time corresponding to the first time-frequency resource.

For example, the method in the first aspect may be applied to the terminal device. For example, the method is performed by the terminal device or an apparatus (such as a chip) built in the terminal device.

In an implementation, the first moment may be an arrival moment of the uplink data, or the first moment is a moment at which a higher layer or an upper layer of the terminal device indicates that the uplink data arrives or there is the to-be-transmitted uplink data. For example, the first moment may be a moment at which the higher layer of the terminal device delivers a data packet. Alternatively, the first moment may be a moment at which higher layer uplink data or upper layer uplink data is generated or a moment after the higher layer uplink data or the upper layer uplink data is generated; or the first moment may be a moment after the arrival moment of the uplink data.

In another implementation, the first moment may be the first target time corresponding to the first time-frequency resource. The first time-frequency resource may occur periodically. The first target time is time of a latest valid first time-frequency resource (or a latest available first time-frequency resource) after the uplink data is generated or arrives, or time of a first time-frequency resource in a 1^{st} periodicity after the uplink data is generated or arrives, or time of a first time-frequency resource in a periodicity after the uplink data is generated or arrives.

Optionally, the first target time may be start time corresponding to the first time-frequency resource, or may be end time corresponding to the first time-frequency resource.

In the method, the first time-frequency resource is a common time-frequency resource that can be shared by different terminal devices. In addition, for the terminal device, the terminal device may send the uplink data based on or by using the first time-frequency resource, without performing a random access procedure. According to the method, when the terminal device does not perform random access, the terminal device can send the uplink data by using the first time-frequency resource indicated by the access network device, thereby reducing downlink message scheduling, reducing signaling overheads and a transmission delay, and increasing an uplink data capacity. In addition, the first time-frequency resource is a shared common time-frequency resource for different terminal devices, so that resource utilization is improved, and a transmission capacity of a communication system is further increased.

This uplink data transmission manner or transmission mechanism may be referred to as a first transmission manner, or referred to as a random access-free early data transmission (early data transmission, EDT), or referred to as a contention-based preconfigured uplink resource (preconfigured uplink resource, PUR). Random access-free EDT means that the terminal device does not need to initiate random access through a physical random access channel (physical random access channel, PRACH), and may also be described as "PRACH-free EDT". A contention-based PUR means that the terminal device performs transmission of the uplink data based on the first time-frequency resource configured by a base station, and the first time-frequency resource is contention-based and shared, and may also be described as a "contention-based PUR".

In a possible design, the second location is a location of the terminal device at a second moment, and the second moment is a moment at which the first configuration information is received. Alternatively, the second moment may be a moment after the first configuration information is received.

Alternatively, in another possible design, the second location is a location of a reference point corresponding to the serving cell.

In a possible design, when the uplink data is sent on the first time-frequency resource, the first target time is not later than second target time corresponding to a second time-frequency resource, and the second time-frequency resource is a time-frequency resource used in a second transmission manner. The second transmission manner includes at least one of the following: an early data transmission manner, a preconfigured uplink resource transmission manner, or a random access transmission manner. If the second time-frequency resource periodically occurs, the second time-frequency resource may be a second time-frequency resource in second time-frequency resources that periodically occur. The second time-frequency resource may be a latest available second time-frequency resource after a generation moment or the arrival moment of the uplink data (for example, the uplink data sent by the terminal device on the first time-frequency resource). Alternatively, the second time-frequency resource may be a second time-frequency resource after a generation moment or the arrival moment of the uplink data. The second target time may be start time corresponding to the second time-frequency resource, or may be end time corresponding to the second time-frequency resource.

In this design, when the first target time is not later than the second target time corresponding to the second time-frequency resource, the terminal device sends the uplink data on the first time-frequency resource in the first transmission manner. This can ensure a transmission delay of the uplink data, and improve transmission efficiency of data.

Optionally, a time difference between the first target time and the second target time is greater than a first time threshold.

In a possible design, the method further includes: obtaining service stop time of the serving cell. When the uplink data is sent on the first time-frequency resource, the service stop time is later than the first target time.

In this design, when the service stop time of the serving cell is later than the first target time, the terminal device sends the uplink data on the first time-frequency resource, so that a transmission success rate of the uplink data can be improved.

Optionally, when the uplink data is sent on the first time-frequency resource, the service stop time is later than the first target time, and a time difference between the service stop time and the first target time is greater than round trip time between the terminal device and the access network device.

Optionally, when the uplink data is sent on the first time-frequency resource, the service stop time is later than the first target time, and a time difference between the service stop time and the first target time is greater than a half of round trip time between the terminal device and the access network device.

Optionally, when the uplink data is sent on the first time-frequency resource, the service stop time is later than the first target time, and a time difference between the service stop time and the first target time is greater than a specific time threshold.

In a possible design, the method further includes: when the service stop time is earlier than the first target time, transmitting the uplink data in the second transmission manner.

Alternatively, in another possible design, the method further includes: when the service stop time is later than the first target time, and the time difference between the service stop time and the first target time is less than the round trip time between the terminal device and the access network device or the half of the round trip time, or is less than the specific time threshold, transmitting the uplink data in the second transmission manner.

The foregoing specific time threshold may be referred to as a third time threshold.

In a possible design, the method further includes: receiving a transport block threshold that is from the access network device. When the uplink data is sent on the first time-frequency resource, a size of the uplink data is less than the transport block threshold.

This design can improve transmission efficiency of the uplink data.

In a possible design, a time alignment timer is still running when the uplink data is sent on the first time-frequency resource.

This design can improve stability of transmission of the uplink data.

In a possible design, the method further includes: receiving the first distance threshold that is from the access network device.

In a possible design, the method further includes: receiving the first signal strength threshold that is from the access network device.

In a possible design, the method further includes: sending identification information of the terminal device on the first time-frequency resource.

Optionally, the identification information of the terminal device and the first configuration information may be carried in a same message, in other words, a message that carries the first configuration information includes the identification information of the terminal device.

In a possible design, the method further includes: sending first information on the first time-frequency resource, where the first information indicates that a transmission manner of the uplink data is the first transmission manner.

In a possible design, the first configuration information further includes a first radio network temporary identifier, and the method further includes: monitoring a physical downlink control channel based on the first radio network temporary identifier, where the physical downlink control channel is scrambled by using the first radio network temporary identifier.

For example, the first radio network temporary identifier (radio network temporary identifier, RNTI) may be an RNTI dedicated to the first transmission manner, for example, referred to as an RNTI used for PRACH-free EDT or a contention-based PUR.

In a possible design, the monitoring the physical downlink control channel includes: starting to monitor the physical downlink control channel at a third moment after transmission of the uplink data ends. An interval between the third moment and time at which the transmission of the uplink data ends is a first quantity of unit time.

In this design, the terminal device may start to monitor the physical downlink control channel after the transmission of the uplink data ends, so that unnecessary power consumption can be reduced. It should be understood that the monitoring the physical downlink control channel in this application is to monitor a physical downlink control channel scrambled by using the first RNTI.

In a possible design, the first configuration information further includes response window configuration information, and the response window configuration information indicates duration of a response window. The monitoring the physical downlink control channel includes: monitoring the physical downlink control channel in the response window.

Optionally, the method further includes: transmitting the uplink data in the second transmission manner after the response window expires.

For example, after the response window expires, the terminal device may indicate, to the higher layer, that transmission in the first transmission manner fails, and the terminal device may transmit the uplink data in the second transmission manner.

In a possible design, the method further includes: receiving first indication information, where the first indication information indicates to transmit the uplink data in the second transmission manner; and stopping monitoring the physical downlink control channel.

In a possible design, the first configuration information is carried in a broadcast message or a dedicated message, and the first time-frequency resource is a common time-frequency resource shared by different terminal devices.

According to a second aspect, this application provides a communication apparatus. The apparatus has a function of implementing the method in the first aspect. The function may be implemented by hardware, or may be implemented by executing corresponding software by hardware. The hardware or the software includes one or more units or modules corresponding to a function of the method in the first aspect, for example, a receiving unit and a sending unit.

The receiving unit is configured to receive first configuration information from an access network device, where the first configuration information indicates a first time-frequency resource.

The sending unit is configured to: when there is to-be-transmitted uplink data, and a location distance between a first location of a terminal device at a first moment and a second location corresponding to a serving cell is less than a first distance threshold, and/or a signal strength of the serving cell is greater than a first signal strength threshold, send the uplink data on the first time-frequency resource, where the first moment is an arrival moment of the uplink data or first target time corresponding to the first time-frequency resource.

In a possible design, the second location is a location of the terminal device at a second moment, and the second moment is a moment at which the first configuration information is received. The second moment may alternatively be a moment after the first configuration information is received.

Alternatively, in another possible design, the second location is a location of a reference point corresponding to the serving cell.

In a possible design, when the uplink data is sent on the first time-frequency resource, the first target time is not later than second target time corresponding to a second time-frequency resource, and the second time-frequency resource is a time-frequency resource used in a second transmission manner. The second transmission manner includes at least one of the following: an early data transmission manner, a preconfigured uplink resource transmission manner, or a random access transmission manner.

Optionally, a time difference between the first target time and the second target time is greater than a first time threshold.

In a possible design, the receiving unit is further configured to obtain service stop time of the serving cell. When the sending unit sends the uplink data on the first time-frequency resource, the service stop time is later than the first target time.

Optionally, when the sending unit sends the uplink data on the first time-frequency resource, the service stop time is later than the first target time, and a time difference between the service stop time and the first target time is greater than round trip time between the terminal device and the access network device.

Optionally, when the sending unit sends the uplink data on the first time-frequency resource, the service stop time is later than the first target time, and a time difference between the service stop time and the first target time is greater than a half of the round trip time between the terminal device and the access network device.

Optionally, when the sending unit sends the uplink data on the first time-frequency resource, the service stop time is later than the first target time, and a time difference between the service stop time and the first target time is greater than a specific time threshold.

In a possible design, the sending unit is further configured to: when the service stop time is earlier than the first target time, transmit the uplink data in the second transmission manner.

Alternatively, in another possible design, the sending unit is further configured to: when the service stop time is later than the first target time, and the time difference between the service stop time and the first target time is less than the round trip time between the terminal device and the access network device, or the half of the round trip time, or the specific time threshold, transmit the uplink data in the second transmission manner.

In a possible design, the receiving unit is further configured to receive a transport block threshold that is from the access network device. When the sending unit sends the uplink data on the first time-frequency resource, a size of the uplink data is less than the transport block threshold.

In a possible design, a time alignment timer is still running when the sending unit sends the uplink data on the first time-frequency resource.

In a possible design, the receiving unit is further configured to receive the first distance threshold that is from the access network device.

In a possible design, the receiving unit is further configured to receive the first signal strength threshold that is from the access network device.

In a possible design, the sending unit is further configured to send identification information of the terminal device on the first time-frequency resource.

In a possible design, the sending unit is further configured to send first information on the first time-frequency resource, where the first information indicates that a transmission manner of the uplink data is the first transmission manner.

In a possible design, the first configuration information further includes a first radio network temporary identifier. The receiving unit is further configured to monitor a physical downlink control channel based on the first radio network temporary identifier, where the physical downlink control channel is scrambled by using the first radio network temporary identifier.

In a possible design, the receiving unit is specifically configured to start to monitor the physical downlink control channel at a third moment after transmission of the uplink data ends. An interval between the third moment and time at which the transmission of the uplink data ends is a first quantity of unit time.

In a possible design, the first configuration information further includes response window configuration information, and the response window configuration information indicates duration of a response window. The receiving unit is specifically configured to monitor the physical downlink control channel in the response window.

Optionally, the sending unit is further configured to transmit the uplink data in the second transmission manner after the response window expires.

In a possible design, the receiving unit is further configured to receive first indication information, where the first indication information indicates to transmit the uplink data in the second transmission manner. After receiving the first indication information, the receiving unit stops monitoring the physical downlink control channel.

In a possible design, the first configuration information is carried in a broadcast message or a dedicated message, and the first time-frequency resource is a common time-frequency resource shared by different terminal devices.

According to a third aspect, this application further provides a communication apparatus, including a processor, configured to execute computer instructions stored in a memory. When the computer instructions are executed, the apparatus is caused to perform the method according to any one of the first aspect or the possible designs of the first aspect.

According to a fourth aspect, this application further provides a communication apparatus, including a processor and an interface circuit. The processor is configured to communicate with another apparatus through the interface circuit, and perform the method according to any one of the first aspect or the possible designs of the first aspect.

For example, in the third aspect and the fourth aspect, the processor is configured to perform the method according to any one of the first aspect or the possible designs of the first aspect.

The communication apparatus in any one of the second aspect to the fourth aspect may be a terminal device, or may be an apparatus (for example, a chip) built in the terminal device.

According to a fifth aspect, this application further provides a computer-readable storage medium, including computer software instructions, also referred to as instructions. When the computer software instructions are run, the method according to any one of the first aspect or the possible designs of the first aspect is implemented. For example, when the computer software instructions are run in a terminal device or an apparatus (for example, a chip) built in the terminal device, the terminal device is enabled to implement the method according to any one of the first aspect or the possible designs of the first aspect.

It may be understood that for beneficial effects that can be achieved in any one of the second aspect to the fifth aspect, refer to beneficial effects in any one of the first aspect or the possible designs of the first aspect. Details are not described herein again.

According to a sixth aspect, this application provides a communication method. The method includes: sending first configuration information, where the first configuration information indicates a first time-frequency resource; and receiving uplink data that is from a terminal device, where the uplink data is carried on the first time-frequency resource. A location distance between a first location of the terminal device at a first moment and a second location corresponding to a serving cell is less than a first distance threshold, and/or a signal strength of the serving cell is greater than a first signal strength threshold, where the first moment is an arrival moment of the uplink data or first target time corresponding to the first time-frequency resource.

In an implementation, the first moment may be an arrival moment of the uplink data, or the first moment is a moment at which a higher layer or an upper layer of the terminal device indicates that the uplink data arrives or there is the to-be-transmitted uplink data. For example, the first moment may be a moment at which the higher layer of the terminal device delivers a data packet. Alternatively, the first moment may be a moment at which higher layer uplink data or upper layer uplink data is generated or a moment after the higher layer uplink data or the upper layer uplink data is generated; or the first moment may be a moment after the arrival moment of the uplink data.

In another implementation, the first moment may be the first target time corresponding to the first time-frequency resource. The first time-frequency resource may occur periodically. The first target time is time of a latest valid first time-frequency resource (or a latest available first time-frequency resource) after the uplink data is generated or arrives, or time of a first time-frequency resource in a 1^{st} periodicity after the uplink data is generated or arrives, or time of a first time-frequency resource in a periodicity after the uplink data is generated or arrives.

Optionally, the first target time may be start time corresponding to the first time-frequency resource, or may be end time corresponding to the first time-frequency resource.

For example, the method in the sixth aspect may be applied to an access network device, for example, a base station. For example, the method is performed by the access network device, or is performed by an apparatus (for example, a chip) built in the access network device.

In a possible design, the second location is a location of the terminal device at a second moment, and the second moment is a moment at which the first configuration information is received. The second moment may alternatively be a moment after the first configuration information is received.

Alternatively, in another possible design, the second location is a location of a reference point corresponding to the serving cell.

In a possible design, when the uplink data is carried on the first time-frequency resource, the first target time is not later than second target time corresponding to a second time-frequency resource, and the second time-frequency resource is a time-frequency resource used in a second transmission manner. The second transmission manner includes at least one of the following: an early data transmission manner, a preconfigured uplink resource transmission manner, or a random access transmission manner.

If the second time-frequency resource periodically occurs, the second time-frequency resource may be a second time-frequency resource in second time-frequency resources that periodically occur. The second time-frequency resource may be a latest available second time-frequency resource after a generation moment or the arrival moment of the uplink data (for example, the uplink data sent by the terminal device on the first time-frequency resource). Alternatively, the second time-frequency resource may be a second time-frequency resource after a generation moment or the arrival moment of the uplink data. The second target time may be start time corresponding to the second time-frequency resource, or may be end time corresponding to the second time-frequency resource.

Optionally, a time difference between the first target time and the second target time is greater than a first time threshold.

In a possible design, the method further includes: sending service stop time of the serving cell. When the uplink data is carried on the first time-frequency resource, the service stop time is later than the first target time.

Optionally, when the uplink data is carried on the first time-frequency resource, the service stop time is later than the first target time, and a time difference between the service stop time and the first target time is greater than round trip time between the terminal device and the access network device.

Optionally, when the uplink data is carried on the first time-frequency resource, the service stop time is later than the first target time, and a time difference between the service stop time and the first target time is greater than a half of round trip time between the terminal device and the access network device.

Optionally, when the uplink data is carried on the first time-frequency resource, the service stop time is later than the first target time, and a time difference between the service stop time and the first target time is greater than a specific time threshold.

In a possible design, the method further includes: sending a transport block threshold. A size of the uplink data is less than the transport block threshold.

In a possible design, the method further includes: sending the first distance threshold.

In a possible design, the method further includes: sending the first signal strength threshold.

In a possible design, the method further includes: receiving identification information of the terminal device, where the identification information of the terminal device is carried on the first time-frequency resource.

In a possible design, the method further includes: receiving first information, where the first information is carried on the first time-frequency resource, and the first information indicates that a transmission manner of the uplink data is the first transmission manner.

In a possible design, the first configuration information further includes a first radio network temporary identifier, and the first radio network temporary identifier is used for monitoring a physical downlink control channel, where the physical downlink control channel is scrambled by using the first radio network temporary identifier.

In a possible design, the first configuration information further includes response window configuration information, and the response window configuration information indicates duration of a response window.

In a possible design, the method further includes: sending first indication information to the terminal device, where the first indication information indicates to transmit the uplink data in the second transmission manner.

In a possible design, the first configuration information is carried in a broadcast message or a dedicated message, and the first time-frequency resource is a common time-frequency resource shared by different terminal devices.

For beneficial effects that can be achieved in the method in the sixth aspect, refer to the beneficial effects in the first aspect. Details are not described herein again.

According to a seventh aspect, this application provides a communication apparatus. The apparatus has a function of implementing the method in the sixth aspect. The function may be implemented by hardware, or may be implemented by executing corresponding software by hardware. The hardware or software includes one or more units or modules corresponding to the function of the method in the sixth aspect, for example, a sending unit and a receiving unit.

The sending unit is configured to send first configuration information, where the first configuration information indicates a first time-frequency resource.

The receiving unit is configured to receive uplink data that is from a terminal device, where the uplink data is carried on the first time-frequency resource.

A location distance between a first location of the terminal device at a first moment and a second location corresponding to a serving cell is less than a first distance threshold, and/or a signal strength of the serving cell is greater than a first signal strength threshold, where the first moment is an arrival moment of the uplink data or first target time corresponding to the first time-frequency resource.

In a possible design, the second location is a location of the terminal device at a second moment, and the second moment is a moment at which the first configuration information is received. The second moment may alternatively be a moment after the first configuration information is received.

Alternatively, in another possible design, the second location is a location of a reference point corresponding to the serving cell.

In a possible design, when the uplink data is carried on the first time-frequency resource, the first target time is not later than second target time corresponding to a second time-frequency resource, and the second time-frequency resource is a time-frequency resource used in a second transmission manner. The second transmission manner includes at least one of the following: an early data transmission manner, a preconfigured uplink resource transmission manner, or a random access transmission manner.

Optionally, a time difference between the first target time and the second target time is greater than a first time threshold.

In a possible design, the sending unit is further configured to send service stop time of the serving cell. When the uplink data is carried on the first time-frequency resource, the service stop time is later than the first target time.

Optionally, when the uplink data is carried on the first time-frequency resource, the service stop time is later than the first target time, and a time difference between the service stop time and the first target time is greater than round trip time between the terminal device and the access network device.

Optionally, when the uplink data is carried on the first time-frequency resource, the service stop time is later than the first target time, and a time difference between the service stop time and the first target time is greater than a half of round trip time between the terminal device and the access network device.

Optionally, when the uplink data is carried on the first time-frequency resource, the service stop time is later than the first target time, and a time difference between the service stop time and the first target time is greater than a specific time threshold.

In a possible design, the sending unit is further configured to send a transport block threshold. A size of the uplink data is less than the transport block threshold.

In a possible design, the sending unit is further configured to send the first distance threshold.

In a possible design, the sending unit is further configured to send the first signal strength threshold.

In a possible design, the receiving unit is further configured to receive identification information of the terminal device, where the identification information of the terminal device is carried on the first time-frequency resource.

In a possible design, the receiving unit is further configured to receive first information, where the first information is carried on the first time-frequency resource, and the first information indicates that a transmission manner of the uplink data is the first transmission manner.

In a possible design, the first configuration information further includes a first radio network temporary identifier, and the first radio network temporary identifier is used for monitoring a physical downlink control channel, where the physical downlink control channel is scrambled by using the first radio network temporary identifier.

In a possible design, the first configuration information further includes response window configuration information, and the response window configuration information indicates duration of a response window.

In a possible design, the sending unit is further configured to send first indication information to the terminal device, where the first indication information indicates to transmit the uplink data in the second transmission manner.

In a possible design, the first configuration information is carried in a broadcast message or a dedicated message, and the first time-frequency resource is a common time-frequency resource shared by different terminal devices.

According to an eighth aspect, this application further provides a communication apparatus, including a processor, configured to execute computer instructions stored in a memory. When the computer instructions are executed, the apparatus is caused to perform the method according to any one of the sixth aspect or the possible designs of the sixth aspect.

According to a ninth aspect, this application further provides a communication apparatus, including a processor and an interface circuit. The processor is configured to communicate with another apparatus through the interface circuit, and perform the method according to any one of the sixth aspect or the possible designs of the sixth aspect.

For example, in the eighth aspect and the ninth aspect, the processor is configured to perform the method according to any one of the sixth aspect or the possible designs of the sixth aspect.

The communication apparatus in any one of the seventh aspect to the ninth aspect may be an access network device, for example, a base station, or may be an apparatus (for example, a chip) built in the access network device.

According to a tenth aspect, this application further provides a computer-readable storage medium, including computer software instructions, also referred to as instructions. When the computer software instructions are run, the method according to any one of the sixth aspect or the possible designs of the sixth aspect is implemented. For example, when the computer software instructions are run in an access network device or an apparatus (for example, a chip) built in the access network device, the access network device is caused to implement the method according to any one of the sixth aspect or the possible designs of the sixth aspect.

It may be understood that, for beneficial effects that can be achieved in any one of the seventh aspect to the tenth aspect, refer to the beneficial effects in any one of the sixth aspect or the possible designs of the sixth aspect. Details are not described herein again.

According to an eleventh aspect, this application further provides a communication apparatus, including a transceiver unit and a processing unit. The transceiver unit may be configured to send and receive information, or configured to communicate with another network element. The processing unit may be configured to process data. For example, the apparatus may implement, through the transceiver unit and the processing unit, the method according to any one of the first aspect and the possible designs of the first aspect, or the method according to any one of the sixth aspect and the possible designs of the sixth aspect.

According to a twelfth aspect, this application further provides a computer program product. When the computer program product is executed, the method according to any one of the first aspect and the possible designs of the first aspect, or the method according to any one of the sixth aspect and the possible designs of the sixth aspect can be implemented.

According to a thirteenth aspect, this application further provides a chip system. The chip system includes one or more interface circuits and one or more processors. The interface circuit and the processor are interconnected through a line. The processor receives and executes computer instructions from a memory of an electronic device through the interface circuit, to implement the method according to any one of the first aspect and the possible designs of the first aspect, or the method according to any one of the sixth aspect and the possible designs of the sixth aspect.

According to a fourteenth aspect, this application further provides a communication system, including a terminal device and an access network device, where the terminal device performs the method according to any one of the first aspect and the possible designs of the first aspect, and the access network device performs the method according to any one of the sixth aspect and the possible designs of the sixth aspect.

According to a fifteenth aspect, this application further provides a terminal device. The terminal device may be configured to implement the method according to any one of the first aspect and the possible designs of the first aspect.

According to a sixteenth aspect, this application further provides an access network device. The access network device may be configured to implement the method according to any one of the sixth aspect and the possible designs of the sixth aspect.

It may be understood that for beneficial effect that can be achieved in any one of the eleventh aspect to the sixteenth aspect, refer to the beneficial effects in the first aspect, the sixth aspect, and the like. Details are not described herein again.

### BRIEF DESCRIPTION OF DRAWINGS

FIG. 1 is a composition diagram of a communication system according to an embodiment of this application;
FIG. 2 is a diagram of a coverage scenario of a quasi-fixed cell according to an embodiment of this application;
FIG. 3 is a diagram of a coverage scenario of a mobile cell according to an embodiment of this application;
FIG. 4a, FIG. 4b, FIG. 4c, and FIG. 4d are other composition diagrams of communication systems according to an embodiment of this application;
FIG. 5 is a composition diagram of a terminal device according to an embodiment of this application;
FIG. 6 is a schematic flowchart of a communication method according to an embodiment of this application;
FIG. 7 is a diagram of a time sequence relationship between service stop time and first target time according to an embodiment of this application;
FIG. 8 is another schematic flowchart of a communication method according to an embodiment of this application;
FIG. 9 is still another schematic flowchart of a communication method according to an embodiment of this application;
FIG. 10 is still another schematic flowchart of a communication method according to an embodiment of this application;
FIG. 11 is still another schematic flowchart of a communication method according to an embodiment of this application; and
FIG. 12 is a diagram of a structure of a communication apparatus according to an embodiment of this application.

### DESCRIPTION OF EMBODIMENTS

In 5G new radio (new radio, NR), user equipment (user equipment, UE) may have three radio resource control (radio resource control, RRC) states: an RRC connected state, an RRC idle (idle) state, and an RRC inactive (inactive) state. The RRC connected state (which may be referred to as a connected state for short in this specification) may also be referred to as an RRC active (active) state or an RRC active mode. The RRC inactive state may also be referred to as an RRC inactive state (which may be referred to as an inactive mode for short in this specification). Compared with the RRC connected state, the RRC idle state and/or the RRC inactive state may be referred to as RRC non-connected states/an RRC non-connected state (which may be referred to as non-connected states/a non-connected state for short in this specification).

After the UE sets up an RRC connection with a network device (for example, a base station), the UE enters the RRC connected state. If the UE does not need to transmit, in the RRC connected state, data to the network device in a preset time period, the network device may determine that the UE enters the RRC inactive state, and the network device may send an RRC release with suspend indication (RRC Release with suspend indication) message to the UE. After receiving the RRC Release with suspend indication message, the UE reserves a context of the UE, and enters the RRC inactive state. When the UE is in the RRC inactive state, the UE may store context information of the UE, and only temporarily release the RRC connection to the network device. When the UE needs to transmit data, the UE may send an RRC resume request message to the network device, and the network device may send an RRC resume response message to the UE. After receiving the resume response message, the UE may send an RRC resume complete message to the network device, and the UE enters the RRC connected state, and resumes using the context of the UE.

Alternatively, when the UE is in the RRC connected state, the network device may send an RRC release message to the UE, and the UE may release the RRC connection to the network device to enter the RRC idle state. When the UE is in the RRC idle state, the UE may send an RRC setup request message to the network device, and the network device may set up the RRC connection with the UE based on the RRC setup request message, so that the UE may enter the RRC connected state.

It may be understood that, compared with entering the RRC connected state from the RRC idle state, a speed at which the UE enters the RRC connected state from the RRC inactive state is higher.

Generally, when the UE in the RRC idle state needs to perform transmission of uplink data, the UE needs to first initiate an RRC connection setup (RRC connection setup) process to enter the RRC connected state, and then performs transmission after entering the RRC connected state.

However, when the UE needs to transmit a small data packet, signaling overheads consumed for entering the RRC connected state may be greater than an amount of data that needs to be transmitted, resulting in extremely low efficiency.

In this background, an embodiment of this application provides a communication method, so that a terminal device can send uplink data by using a first time-frequency resource indicated by an access network device, without performing random access, to reduce signaling overheads and a transmission delay, and increase an uplink data capacity. The first time-frequency resource is a shared common time-frequency resource for different terminal devices, so that resource utilization is higher, and a transmission capacity of a communication system can be increased.

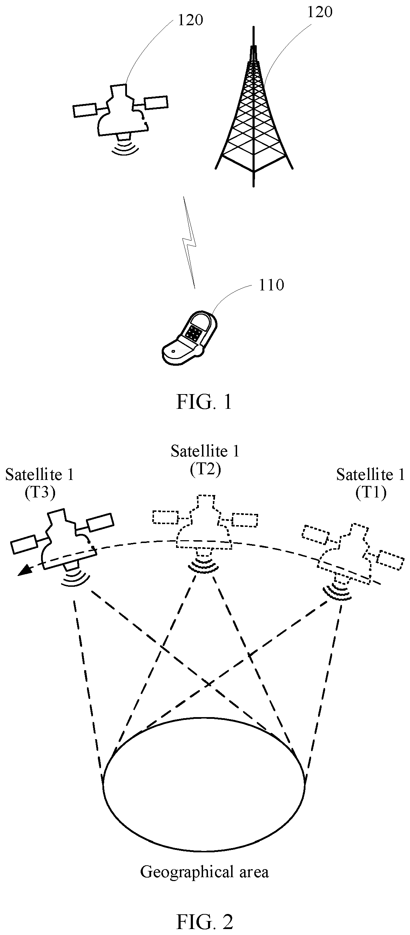

For example, FIG. 1 is a composition diagram of a communication system according to an embodiment of this application. The communication method may be applied to the communication system shown in FIG. 1. As shown in FIG. 1, the communication system may include a terminal device 110 and an access network device 120.

The terminal device 110 may also be referred to as user equipment (user equipment, UE). The terminal device 110 may be a wireless terminal in industrial control (industrial control), a smart home device (for example, a refrigerator, a television, an air conditioner, or an electric meter), a smart robot, a workshop device, a wireless terminal in autonomous driving (autonomous driving), a wireless terminal in remote medical surgery (remote medical surgery), a wireless terminal in a smart grid (smart grid), a wireless terminal in transportation safety (transportation safety), a wireless terminal in a smart city (smart city), or a wireless terminal in a smart home (smart home), a flight device (for example, a smart robot, a hot air balloon, an uncrewed aerial vehicle, or an airplane), and another device configured to perform communication in a wireless system, for example, another terminal (for example, a water meter) in the internet of things (internet of things, IoT).

Alternatively, the terminal device 110 may be a mobile station (mobile station, MS), a mobile terminal (mobile terminal, MT), or a device that provides voice and/or data connectivity for a user, for example, a mobile phone ("cellular" phone), a phone, a computer, a cordless phone, a session initiation protocol (session initiation protocol, SIP) phone, a wireless local loop (wireless local loop, WLL) station, a personal digital assistant (personal digital assistant, PDA), a laptop computer, a handheld communication device, a handheld compute device, a satellite wireless device, a wireless modem card, a set top box (set top box, STB), customer premises equipment (customer premise equipment, CPE), a wearable device (for example, a smart watch, a smart band, or a pedometer), a vehicle-mounted device (for example, a car, a bicycle, an electric vehicle, an airplane, a ship, a train, or a high-speed railway), a virtual reality (virtual reality, VR) device, an augmented reality (augmented reality, AR) device, a terminal in a 5G mobile communication system, a terminal in a future evolved network, or the like.

A specific representation form or a product form of the terminal device 110 is not limited in this application.

The access network device 120 may also be referred to as a radio access network (radio access network, RAN) device, or a next-generation radio access network device. For example, the access network device 120 may be a base station, or an access point, or a device that communicates with, by using one or more sectors, a wireless terminal through an air interface in an access network.

In some possible scenarios, the access network device 120 may include various forms of macro base stations, micro base stations (also referred to as small cells), and the like. For example, the access network device 120 may include: a base station in wideband code division multiple access (wideband code division multiple Access, WCDMA) or LTE, a next generation NodeB (next generation NodeB, gNB), a next generation evolved NodeB (next generation evolved NodeB, Ng-eNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), and a base band unit (base band unit, BBU), or a wireless fidelity (wireless fidelity, Wi-Fi) access point (access point, AP), a wireless relay node, a wireless backhaul node, a transmission point (transmission point, TP), or a transmission reception point (transmission reception point, TRP).

In some deployments, the gNB may include a central unit (central unit, CU) and a distributed unit (distributed unit, DU). The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements a part of physical layer processing functions, radio frequency processing, and a function related to an active antenna.

In some other possible scenarios, the access network device 120 may alternatively be implemented based on a non-terrestrial network (non-terrestrial network, NTN). The NTN is a generic term for networks involving flying objects, including satellite communication networks, high altitude platform systems (high altitude platform station, HAPS), and air-to-ground networks. Key value scenarios include areas with poor land coverage, marine communication, public security requirements, inter-airplane communication, railways, and the like. These scenarios aim to provide mobile broadband services for users.

The HAPS is carried on an airborne platform, and mainly includes an airplane, a balloon, and an airship. The high altitude platform station serves as a mobile communication base station and a mobile service is provided by using a same frequency band as a terrestrial mobile network. In this example, the access network device 120 may include a high altitude platform station.

The satellite communication network relies on a satellite-borne platform, and mainly includes a low earth orbit (low earth orbit, LEO) satellite, a medium earth orbit (medium earth orbit, MEO) satellite, and a geostationary earth orbit (geostationary earth orbit, GEO) satellite.

When the access network device 120 is implemented based on the NTN, a cell corresponding to the access network device 120 may be referred to as an NTN cell. Based on movement of NTN cells in a ground coverage area, the NTN cells may be classified into three types: an earth-fixed (earth-fixed) NTN cell, a quasi-earth-fixed (quasi-earth-fixed) NTN cell, and an earth-moving (earth-moving) NTN cell.

The earth-fixed NTN cell is also referred to as a fixed cell or a stationary cell, and means that a beam or a cell (or a satellite) fixedly covers a geographical area. In other words, the coverage area of the earth-fixed NTN cell is fixed to an area on the ground, that is, continuous fixed-point coverage. For example, an NTN cell provided by the GEO satellite is of this type.

The quasi-earth-fixed NTN cell is also referred to as a quasi-fixed cell. A coverage area of the quasi-fixed cell is fixed to an area on the ground for a period of time, and is changed to another area on the ground after a period of time, that is, fixed-point coverage within a period of time. For example, the LEO satellite and the MEO satellite may provide an NTN cell that is of this type.

For example, FIG. 2 is a diagram of a coverage scenario of a quasi-fixed cell according to an embodiment of this application. As shown in FIG. 2, in a time period from time T1 to time T2 and to time T2, a beam or a cell corresponding to a satellite 1 covers a geographical area within limited time. Different geographical areas can be covered in another time period. For example, the satellite 1 may be a non-geostationary orbit (non-geostationary orbit, NGSO) satellite.

A terrestrial mobile NTN cell is also referred to as a mobile cell. A coverage area of the mobile cell slides on the ground. An LEO satellite and an MEO satellite can provide an NTN cell that is of this type.

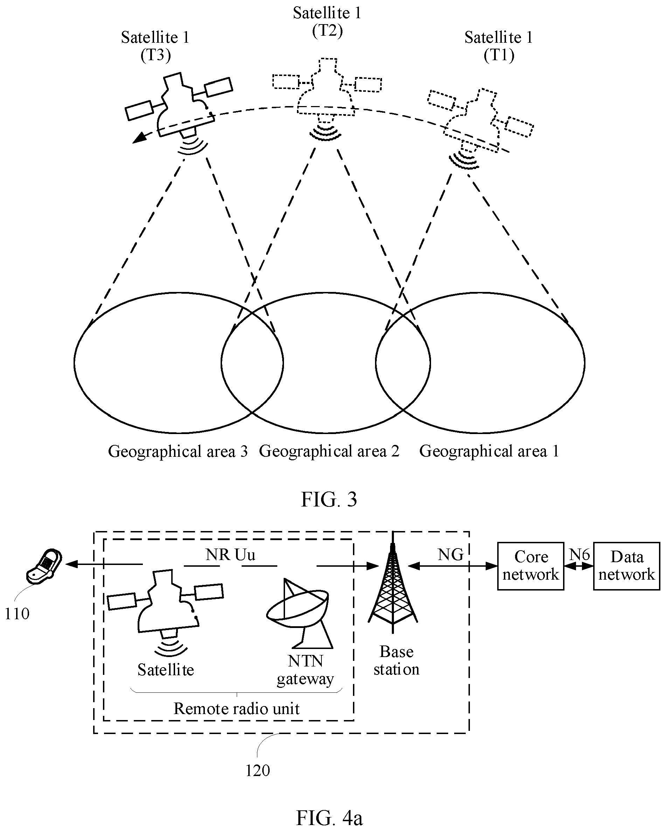

For example, FIG. 3 is a diagram of a coverage scenario of a mobile cell according to an embodiment of this application. As shown in FIG. 3, within time T1, a beam or a cell corresponding to a satellite 1 covers a geographical area 1. Within time T2, a beam or a cell corresponding to the satellite 1 covers a geographical area 2. Within time T3, a beam or a cell corresponding to the satellite 1 covers a geographical area 3.

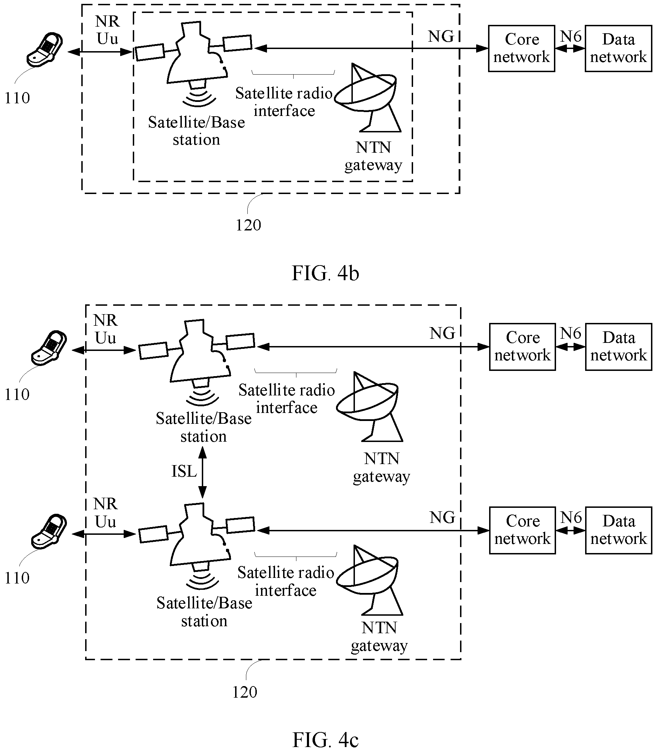

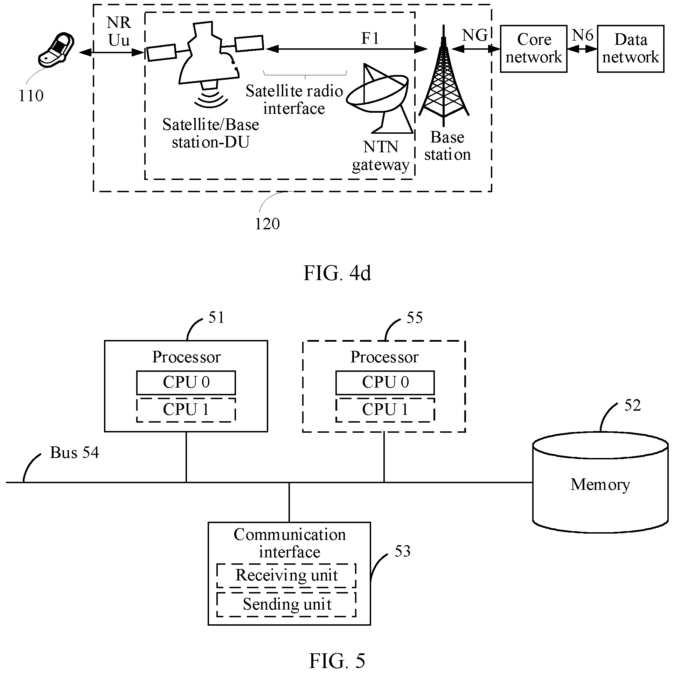

For example, FIG. 4a, FIG. 4b, FIG. 4c, and FIG. 4d are other composition diagrams of communication systems according to an embodiment of this application.

As shown in FIG. 4a, in a possible design, an NTN-based RAN architecture (NTN-based NG-RAN architecture) of the access network device 120 may be a transparent (transparent) satellite architecture. In the architecture, a satellite is only responsible for signal forwarding and does not have a data processing capability. A base station (gNB) is located on the ground, and the satellite is connected to the base station through a gateway (gateway) on the ground. The satellite and the gateway can form a remote radio unit (remote radio unit). A signal between a terminal device 110 and the base station is transmitted through the satellite, and a data processing function is still in the base station. The terminal device 110 is connected to the satellite through an NR Uu interface. A link between the satellite and the terminal device 110 is referred to as a service link (service link), and a link between the satellite and the base station is referred to as a feeder link (feeder link). The base station is connected to a core network (core network) through an NG interface, and the core network is connected to a data network (data network) through an N6 interface. For example, functions of the satellite include radio frequency filtering (radio frequency filtering) and frequency conversion and amplification (frequency conversion and amplification). That is, the satellite is mainly used as a layer 1 relay (L1 relay) to regenerate a physical layer signal and does not have another higher protocol layer.

The transparent (transparent) satellite architecture shown in FIG. 4a is also referred to as a transparent transmission architecture.

As shown in FIG. 4b, in another possible design, an NTN-based RAN architecture (NTN-based NG-RAN architecture) of the access network device 120 may be a regenerative satellite architecture without an inter-satellite link. In this architecture, a satellite may be used as a base station. A feeder link between an NTN gateway and the satellite is a satellite radio interface (satellite radio interface, SRI). The satellite has a processing function of the base station. The terminal device 110 is connected to the satellite through an NR Uu interface. The satellite is connected to a core network (core network) through an NG interface, and the core network is connected to a data network (data network) through an N6 interface.

As shown in FIG. 4c, in still another possible design, an NTN-based RAN architecture (NTN-based NG-RAN architecture) of the access network device 120 may be a regenerative satellite architecture with an inter-satellite link (inter-satellite link, ISL). The architecture is similar to the architecture shown in FIG. 4b, and a difference lies in that there is the ISL between satellites. Details are not described again.

As shown in FIG. 4d, in still another possible design, in an NTN-based RAN architecture (NTN-based NG-RAN architecture) of the access network device 120, a satellite may be a regenerative satellite with a DU processing function of a base station. In other words, in this architecture, the satellite is used as a DU. Optionally, the base station may perform a function of the CU.

The satellite architectures shown in FIG. 4b, FIG. 4c, and FIG. 4d are also referred to as regenerative architectures (regenerative payload). It can be learned that in the regenerative architecture, the satellite has all or some functions of the base station, that is, the satellite may perform data processing. Specifically, there are two forms: A complete base station is located on a satellite, and a base station DU is located on a satellite. A link between the satellite/base station and UE is referred to as a service link (service link).

In some other possible designs, the satellite may further have an integrated access and backhaul (integrated access and backhaul, IAB) function.

A specific implementation form of an NTN-based RAN architecture is not limited in this application.

Optionally, the communication system in embodiments of this application may be a wideband code division multiple access (wideband code division multiple access, WCDMA) system, a long term evolution (long term evolution, LTE) system, a long term evolution-advanced LTE-A (LTE-advanced) system, an LTE frequency division duplex (frequency division duplex, FDD) system, a universal mobile telecommunications system (universal mobile telecommunications system, UMTS), a 5G NR system, or the like, or may be a future 6th generation mobile communication technology (the 6th generation mobile communication technology, 6G) network communication system, or another future communication system. A specific type of the communication system is not limited in this application.

For example, when the communication system is the 5G NR system, the communication system may further include a core network device, and the core network device may communicate with an access network device through a next generation (next generation, NG) interface.

It may be understood that the communication system is merely intended to describe the technical solutions in embodiments of this application more clearly, and does not constitute a limitation on the technical solutions provided in embodiments of this application. For example, the communication system may further include another device, for example, a network control device. The network control device may be an operation, administration, and maintenance (operation administration and maintenance, OAM) system, which is also referred to as a network management system. The network control device may manage the foregoing network device.

For example, FIG. 5 is a composition diagram of a terminal device according to an embodiment of this application. The terminal device may be the terminal device 110 in the foregoing communication system. As shown in FIG. 5, the terminal device may include at least one processor 51, a memory 52, a communication interface 53, and a bus 54.

The processor 51 is a control center of the terminal device, and may be one processor, or may be a generic term of a plurality of processing elements. For example, the processor 51 may be a central processing unit (central processing unit, CPU), or may be an application-specific integrated circuit (application-specific integrated circuit, ASIC), or may be configured as one or more integrated circuits for implementing embodiments of this application, for example, one or more microprocessors (digital signal processor, DSP) or one or more field programmable gate arrays (field programmable gate array, FPGA).

The processor 51 may run or execute a software program stored in the memory 52, and invoke data stored in the memory 52, to perform various functions of the terminal device. For example, the steps performed by the terminal device in the communication method provided in embodiments of this application may be performed.

During specific implementation, in an embodiment, the processor 51 may include one or more CPUs, for example, a CPU 0 and a CPU 1 shown in FIG. 5.

During specific implementation, in an embodiment, the terminal device may include a plurality of processors, for example, the processor 51 and a processor 55 shown in FIG. 5. Each of the processors may be a single-core processor (single-CPU), or may be a multi-core processor (multi-CPU). The processor herein may be one or more devices, circuits, and/or processing cores configured to process data (for example, computer program instructions).

The memory 52 may store a software program of the method steps performed by the terminal device, and the processor 51 controls execution of the software program. The memory 52 may be a read-only memory (read-only memory, ROM) or another type of static storage device capable of storing static information and instructions, or may be a random access memory (random access memory, RAM) or another type of dynamic storage device capable of storing information and instructions, or may be an electrically erasable programmable read-only memory (electrically erasable programmable read-only memory, EEPROM), a compact disc read-only memory (compact disc read-only memory, CD-ROM) or other compact disc storage, optical disc storage (including a compressed optical disc, a laser disc, an optical disc, a digital versatile disc, a Blu-ray disc, or the like), a magnetic disk storage medium or another magnetic storage device, or any other medium capable of carrying or storing expected program code in a form of an instruction or a data structure and capable of being accessed by a computer. However, this is not limited.

The memory 52 may exist independently, and is connected to the processor 51 through the bus 54. Alternatively, the memory 52 may be integrated with the processor 51. This is not limited herein.

The communication interface 53 is configured to communicate with another device or a communication network by using any apparatus like a transceiver. The communication interface 53 may be an Ethernet interface, a radio access network (radio access network, RAN) interface, a wireless local area network (wireless local area network, WLAN) interface, or the like. The communication interface 53 may include a receiving unit for implementing a receiving function and a sending unit for implementing a sending function.

The bus 54 may be an industry standard architecture (industry standard architecture, ISA) bus, a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used to represent the bus in FIG. 5, but this does not mean that there is only one bus or only one type of bus.

Although the bus 54 is used in FIG. 5, it may be understood that the bus may alternatively be replaced with a connection relationship in another form, and is not limited to the bus itself.

Optionally, in this embodiment of this application, for composition of the access network device (for example, a base station), refer to FIG. 5. Alternatively, the access network device may include more or fewer components than those shown in FIG. 5. This is not limited herein.

The following describes the communication method provided in embodiments of this application by using an example. Processing described below as being performed by a single execution body may alternatively be divided into processing performed by a plurality of execution bodies. These execution bodies may be logically and/or physically separated. It should be understood that with evolution of a network architecture and emergence of a new service scenario, the technical solutions provided in embodiments of this application are also applicable to similar technical problems.

It should be noted that, in the descriptions of embodiments of this application, words such as "first" and "second" are merely intended for distinguishing description, and are not used to specially limit a feature. In other words, first or second may include more content, but is not limited to a specific concept. The term "and/or" describes an association relationship for describing associated objects and represents that three relationships may exist. For example, A and/or B may represent the following three cases: Only A exists, both A and B exist, and only B exists. The character "/" generally indicates an "or" relationship between the associated objects. "At least one" means one or more, and "a plurality of" means two or more. In embodiments of this application, only fewer steps than all steps may be performed, or more steps may be performed. This is not limited. "At least one of the following" or a similar expression thereof represents any combination of the listed items. For example, at least one of A, B, and (or) C may represent the following cases: Only A exists, only B exists, only C exists, both A and B exist, both B and C exist, both A and C exist, and both A, B, and C exist. A, B, and C may be singular or plural.

It should be understood that, in this application, "at least one" means one or more, and "a plurality of" means two or more. In addition, "equal to" in this application may be used together with "greater than", or may be used together with "less than". When "equal to" and "greater than" are used together, a technical solution corresponding to "greater than" is used; and when "equal to" and "less than" are used together, a technical solution corresponding to "less than" is used.

Unless otherwise defined, all technical and scientific terms used in this specification have same meanings as those usually understood by a person skilled in the art of this application. Terms used in the specification of this application are merely for the purpose of describing specific embodiments, but are not intended to limit this application.

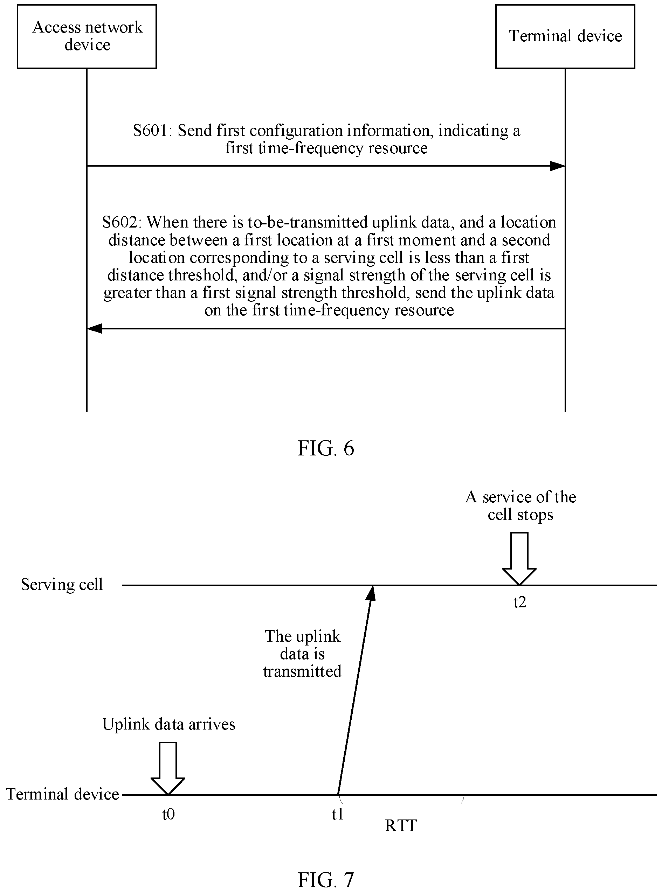

FIG. 6 is a schematic flowchart of a communication method according to an embodiment of this application. As shown in FIG. 6, the communication method may include S601 and S602.

For example, in the procedure shown in FIG. 6, steps performed by a terminal device may be specifically performed by the terminal device or an apparatus (for example, a chip) built in the terminal device. Steps performed by an access network device may be specifically performed by the access network device or an apparatus (for example, a chip) built in the access network device.

S601: The access network device sends first configuration information, where the first configuration information indicates a first time-frequency resource.

Correspondingly, the terminal device may receive the first configuration information that is from the access network device.

For example, the first configuration information may include periodicity information, offset information, and resource configuration information. The resource configuration information indicates a first frequency domain resource. The periodicity information, the offset information, and the resource configuration information indicate the first time-frequency resource, and the first frequency domain resource is a frequency domain resource corresponding to the first time-frequency resource.

The periodicity information may indicate or specify a time domain periodicity of the first time-frequency resource, for example, 20 milliseconds (ms), and the offset information may indicate a time domain offset of the first time-frequency resource. The first time-frequency resource may be determined based on the time domain resource indicated by the periodicity information and the offset information, and the first frequency domain resource indicated by the resource configuration information.

Optionally, the resource configuration information may further indicate a first time domain resource, and the first time domain resource is a time domain resource corresponding to the first time-frequency resource. In other words, the resource configuration information may indicate both the first time domain resource and the first frequency domain resource, to indicate the first time-frequency resource. The terminal device may directly obtain the first time-frequency resource based on the resource configuration information. It should be understood that time domain information of the first time-frequency resource indicated by the resource configuration information is consistent with the periodicity information and the offset information.

For example, the first configuration information may further include at least one (any one or more) of the following information: a start frame number, a start subframe number, and a start hyper frame number. The start frame number, the start subframe number, the start hyper frame number, and the like may be used for determining periodicity start time of the first time-frequency resource.

Optionally, in some other implementations, the first configuration information may alternatively indicate the periodicity start time of the first time-frequency resource by using a slot number, a time domain symbol, and/or the like. For example, the time domain symbol may be an orthogonal frequency division multiplexing (orthogonal frequency division multiplexing, OFDM) symbol or another symbol that may be implemented in the future. Alternatively, the first configuration information may include information such as the start frame number, the start subframe number, and the start hyper frame number, or may include the slot number, the time domain symbol, and the like. A manner in which the first configuration information indicates the periodicity start time of the first time-frequency resource is not limited in this application.

In this embodiment of this application, the first time-frequency resource is a common time-frequency resource sent by the access network device (for example, a base station or a satellite), and different terminal devices may share the time-frequency resource. In addition, for the terminal device, the terminal device may send uplink data by using or based on the first time-frequency resource, without performing a random access procedure.

In a possible design, the first configuration information is carried in a broadcast message. For example, the access network device may send, by using the broadcast message, the first configuration information in a broadcast manner. The terminal device may receive the broadcast message, to obtain the first time-frequency resource.

Optionally, the access network device may send the broadcast message based on a specific periodicity.

In another possible design, the access network device may alternatively send the first configuration information to different terminal devices in a unicast manner. For example, the access network device may send the first configuration information to the terminal device by using a dedicated message or dedicated signaling, and the terminal device may receive the dedicated message, to obtain the first time-frequency resource.

It should be understood that regardless of whether the access network device sends the first configuration information in the broadcast or unicast manner, the sending of the uplink data between the terminal device and the access network device do not need the msg1 message and the msg2 message to be sent first, in other words, the terminal device does not depend on the msg1 message or the msg2 message when using the first time-frequency resource.

After receiving the first configuration information, the terminal device may select, based on an uplink data transmission requirement, the first time-frequency resource to send the uplink data. For example, S602 is performed.

S602: When there is to-be-transmitted uplink data, and a location distance between a first location of the terminal device at a first moment and a second location corresponding to a serving cell is less than a first distance threshold, and/or a signal strength of the serving cell is greater than a first signal strength threshold, the terminal device sends the uplink data on the first time-frequency resource.

The first moment is an arrival moment of the uplink data or first target time corresponding to the first time-frequency resource.

In other words, the uplink data of the terminal device is carried on the first time-frequency resource.

Correspondingly, the access network device may receive the uplink data on the first time-frequency resource.

For example, that there is to-be-transmitted uplink data for the terminal device means that a higher layer or an upper layer of the terminal device indicates that uplink data arrives or that there is the to-be-transmitted uplink data. In some possible scenarios, the uplink data may be mobile originated (or terminal originated) data from the upper layer or the higher layer. The upper layer or the higher layer may be an application side, a session layer, a transport layer, or the like.

When there is the to-be-transmitted uplink data, the terminal device may determine whether a preset condition is satisfied or met, and when the preset condition is satisfied, send the uplink data on the first time-frequency resource.

As described in S602, in a possible design, the preset condition may include: The location distance between the first location of the terminal device at the first moment and the second location corresponding to the serving cell is less than the first distance threshold.

In an implementation of this design, the first moment may be the arrival moment of the uplink data, or the first moment is a moment at which the higher layer or the upper layer of the terminal device indicates that the uplink data arrives or there is the to-be-transmitted uplink data. For example, the first moment may be a moment at which the higher layer of the terminal device delivers a data packet. Alternatively, the first moment may be a moment at which higher layer or upper layer uplink data is generated or a moment after the uplink data is generated; or the first moment may be a moment after the arrival moment of the uplink data.

In another implementation of this design, the first moment may be the first target time corresponding to the first time-frequency resource. It may be understood that the first time-frequency resource may occur periodically. The first target time described in this specification is time of a latest valid first time-frequency resource (or a latest available first time-frequency resource) after the uplink data is generated or arrives, or time of a first time-frequency resource in a 1^{st} periodicity after the uplink data is generated or arrives, or time of a first time-frequency resource in a periodicity after the uplink data is generated or arrives.

Optionally, the first target time may be start time corresponding to the first time-frequency resource, or may be end time corresponding to the first time-frequency resource.

Optionally, the first target time may be a frame or a subframe in the first time-frequency resource. For example, a periodicity of the first time-frequency resource is 20 ms, a time domain length of the first time-frequency resource is two frames or 20 subframes, first target time of a 1^{st} first time-frequency resource may be a frame 0 or a subframe 0 of the frame 0, and first target time of a 2^{nd} first time-frequency resource may be a frame 2 or a subframe 0 of the frame 2.

Alternatively, the first target time may be represented by using a time domain symbol or a slot, for example, may be an X^{th} slot or time domain symbol of the first time-frequency resource. X may be an integer greater than or equal to 0. For example, X is 0 or 1.

A definition of the first target time is not limited in this application, and a frame length, a subframe length, a quantity relationship between a frame and a subframe, a time domain symbol, a slot length, and the like of the first time-frequency resource are not limited.

In this design, the serving cell is a cell on which the terminal device currently camps. For example, the serving cell may be an NTN cell.

In an implementation, the second location corresponding to the serving cell may be a location of the terminal device at a second moment, and the second moment is a moment at which the terminal device receives the first configuration information. For example, the second moment may be a moment at which the terminal device receives the broadcast message or the dedicated message that carries the first configuration information. The second moment may alternatively be a moment after the first configuration information is received.

In another implementation, the second location corresponding to the serving cell may be a location of a reference point corresponding to the serving cell.

For example, the reference point corresponding to the serving cell may be a center point of a coverage area of the serving cell. Alternatively, when the serving cell is the NTN cell, the reference point may alternatively be a sub-satellite point of the serving cell. For example, the reference point may be an intersection point of a connection line between the earth center and a satellite on a surface of the earth. Alternatively, the reference point corresponding to the serving cell may be another point within the coverage area of the serving cell, for example, any point. Alternatively, the reference point corresponding to the serving cell may be a point outside the coverage area of the serving cell. Implementation of the reference point corresponding to the serving cell is not limited in this application. It should be noted that when the serving cell is an NTN cell corresponding to a satellite, the reference point should be within a coverage area of the satellite.

Optionally, the first location and the second location may be represented by using longitude and latitude coordinates, a world coordinate system, or another coordinate system. When the second location is the location of the reference point corresponding to the serving cell, location information of the reference point may be configured by the access network device for the terminal device. The access network device may configure the location information of the reference point for the terminal device by using the broadcast message or the dedicated message that carries the first configuration information, or may configure the location information of the reference point for the terminal device by using another message or in another manner. This is not limited herein.

The location distance between the first location and the second location may be obtained by the terminal device through calculation based on location information of the first location and the second location. For example, the terminal device may calculate a coordinate distance between the first location and the second location, to obtain the location distance between the first location and the second location.

In this design, when the terminal device determines that the location distance between the first location and the second location is less than the first distance threshold, it may be considered that the preset condition is satisfied. When the location distance between the first location of the terminal device at the first moment and the second location corresponding to the serving cell is greater than the first distance threshold, it is considered that the preset condition is not satisfied. Optionally, when the location distance between the first location of the terminal device at the first moment and the second location corresponding to the serving cell is equal to the first distance threshold, it may be equivalent to a case in which the location distance is less than the first distance threshold, and it is considered that the preset condition is satisfied; or it may be equivalent to a case in which the location distance is greater than the first distance threshold, and it is considered that the preset condition is not satisfied. This is not limited.

Optionally, a value of the first distance threshold may be 3 kilometers (KM), 4 km, or the like. For example, the reference point is the center point of the coverage area of the serving cell. A smaller first distance threshold indicates better link quality when the terminal device sends the uplink data. The first distance threshold is set within an appropriate range, so that transmission of the uplink data can be more stable. A value of the first distance threshold is not limited in this application.

Optionally, the first distance threshold is configured by the access network device for the terminal device. For example, the method may include: The access network device sends the first distance threshold. Correspondingly, the terminal device receives the first distance threshold. In some possible implementations, the first distance threshold and the first configuration information may be configured by the access network device for the terminal device by using a message that carries the first configuration information. In some other possible implementations, the access network device may alternatively configure the first distance threshold for the terminal device by using another message, for example, another broadcast message or dedicated message. This is not limited herein.

Alternatively, the first distance threshold may be written into the terminal device in a preconfigured or predefined manner. A manner in which the terminal device obtains the first distance threshold is not limited in this application.

In another possible design, the preset condition may alternatively include: The signal strength of the serving cell is greater than the first signal strength threshold.

The signal strength of the serving cell may be a received signal level (received signal level) or received signal quality (received signal quality) of the serving cell that is obtained by the terminal device through measurement.

In an implementation of this design, that the signal strength of the serving cell is greater than the first signal strength threshold may include: The signal strength of the serving cell is greater than the first signal strength threshold at a current moment. For example, the current moment may be a moment at which the signal strength of the serving cell is obtained through measurement, and may also be a moment when there is the to-be-transmitted uplink data or after there is the to-be-transmitted uplink data.

In another implementation of this design, that the signal strength of the serving cell is greater than the first signal strength threshold may include: The signal strength of the serving cell is greater than the first signal strength threshold in a period of time before or after a current moment. Duration of the period of time is not limited. It may be understood that the current moment may be a moment at which signal quality of the serving cell is obtained through measurement. Alternatively, the current moment may be a moment after the foregoing period of time starting from the moment at which the signal quality of the serving cell is obtained through measurement.

In still another implementation of this design, that the signal strength of the serving cell is greater than the first signal strength threshold may include: At a plurality of consecutive or nonconsecutive time points, the signal strength of the serving cell is greater than the first signal strength threshold (or an average value is greater than the first signal strength threshold). A quantity of time points is not limited.

In this design, when the terminal device determines that the signal strength of the serving cell is greater than the first signal strength threshold, it may be considered that the preset condition is satisfied. When the signal strength of the serving cell is less than the first signal strength threshold, it is considered that the preset condition is not satisfied. Optionally, when the signal strength of the serving cell is equal to the first signal strength threshold, it may be equivalent to a case in which the signal strength is greater than the first signal strength threshold, and it is considered that the preset condition is satisfied; or it may be equivalent to a case in which the signal strength is less than the first signal strength threshold, and it is considered that the preset condition is not satisfied. This is not limited.

Optionally, a value of the first signal strength threshold may be a value close to or greater than a signal strength required for random access, or may be another defined value. This is not limited. A larger first signal strength threshold indicates better link quality when the terminal device sends the uplink data. The first signal strength threshold is set within an appropriate range, so that transmission of the uplink data can be more stable.

Optionally, the first signal strength threshold is configured by the access network device for the terminal device. For example, the method may include: The access network device sends the first signal strength threshold. Correspondingly, the terminal device receives the first signal strength threshold. In some possible implementations, the first signal strength threshold and the first configuration information may be configured by the access network device for the terminal device by using a message that carries the first configuration information. In some other possible implementations, the access network device may alternatively configure the first signal strength threshold for the terminal device by using another message, for example, another broadcast message or dedicated message. This is not limited herein.

Alternatively, the first signal strength threshold may be written into the terminal device in a preconfigured or predefined manner. A manner in which the terminal device obtains the first signal strength threshold is not limited in this application.

In still another possible design, the preset conditions in the foregoing two designs may be in an "and/or" relationship. For example, the preset condition may alternatively include: The location distance between the first location of the terminal device at the first moment and the second location corresponding to the serving cell is less than the first distance threshold, and the signal strength of the serving cell is greater than the first signal strength threshold. When both the foregoing two preset conditions are satisfied, the terminal device may send the uplink data on the first time-frequency resource. For another example, when at least one or either of the foregoing two preset conditions is satisfied, the terminal device may send the uplink data on the first time-frequency resource. Implementation of the preset condition is not limited in this application.

It should be understood that the access network device may configure the first distance threshold and the first signal strength threshold for the terminal device by using one message, for example, by using a message that carries the first configuration information. The access network device may alternatively configure the first distance threshold and the first signal strength threshold for the terminal device by using different messages.

As described above, in this embodiment of this application, when there is the to-be-transmitted uplink data for the terminal device, and the location distance between the first location of the terminal device at the first moment and the second location corresponding to the serving cell is less than the first distance threshold, and/or the signal strength of the serving cell is greater than the first signal strength threshold, the terminal device may send the uplink data on the first time-frequency resource based on an indication of the first configuration information. The first time-frequency resource is a common time-frequency resource that can be shared by different terminal devices. In addition, for the terminal device, the terminal device may send the uplink data by using or based on the first time-frequency resource, without performing a random access procedure.

For example, the terminal device is an IoT device, for example, a water meter. The IoT device may receive the first configuration information, and when the uplink data needs to be sent, S602 in FIG. 6 is triggered to be performed. The first time-frequency resource used by the IoT device to send the uplink data does not need to be scheduled by using a downlink message (for example, random access). Therefore, signaling overheads and a transmission delay are reduced. For example, a waste of a downlink message capacity/resources is reduced. In addition, an uplink data capacity is not limited by the downlink message capacity, and is increased. The first time-frequency resource may be common between different IoT devices, thereby improving resource utilization and further increasing a transmission capacity of a communication system.

In other words, according to the communication method provided in this embodiment of this application, when the terminal device does not perform random access, the terminal device can send the uplink data by using the first time-frequency resource indicated by the access network device, thereby reducing downlink message scheduling, reducing signaling overheads and a transmission delay, and increasing an uplink data capacity. In addition, the first time-frequency resource is a shared common time-frequency resource for different terminal devices, so that resource utilization is improved, and a transmission capacity of a communication system is further increased.

In embodiments of this application, this uplink data transmission manner or transmission mechanism may be referred to as a first transmission manner, or referred to as a random access-free early data transmission (early data transmission, EDT) manner, or referred to as a contention-based preconfigured uplink resource (preconfigured uplink resource, PUR) transmission manner. Random access-free EDT means that the terminal device does not need to initiate random access through a physical random access channel (physical random access channel, PRACH), and may also be described as "PRACH-free EDT". A contention-based PUR means that the terminal device performs transmission of the uplink data based on the first time-frequency resource configured by a base station, and the first time-frequency resource is contention-based and shared, and may also be described as a "contention-based PUR".

Similarly, the first time-frequency resource may be described as a "PRACH-free EDT" resource or a "contention-based PUR" resource. The first target time corresponding to the first time-frequency resource may be described as a "PRACH-free EDT" occasion or a "contention-based PUR" occasion. The first configuration information may be described as "PRACH-free EDT" configuration information or "contention-based PUR" configuration information.

It should be understood that a specific name of the first transmission manner is not limited in this application. The first transmission manner may alternatively be described by using another name in the future.

Optionally, in the embodiments of this application, when the terminal device sends the uplink data in the first transmission manner, the terminal device may be in an RRC idle state or an RRC inactive state. The terminal device is enabled to perform transmission of the uplink data when the terminal device does not enter the RRC connected state, for example, perform transmission of the uplink data in the RRC idle state, so that transmission efficiency of data can be effectively improved and power consumption of the terminal device can be reduced.

For example, the higher layer or the upper layer of the terminal device indicates that the uplink data arrives, and may trigger the terminal device to request to set up or resume an RRC connection. When the terminal device sends the uplink data to the access network device, a message that carries the uplink data may be referred to as an RRC early data request (RRCEarlyDataRequest) message.

Alternatively, when the terminal device sends the uplink data in the first transmission manner, the terminal device may be in an RRC connected state, or another state of the terminal device that may be defined in the future. A state in which the terminal device sends the uplink data is not limited in this application.

Optionally, when the terminal device sends the uplink data to the access network device, the message that carries the uplink data may also be referred to as a first message. The first message may be described as the RRCEarlyDataRequest message, or may be described as another message name. A name of the first message is not limited herein.

For example, in this embodiment of this application, the terminal device and the access network device may further support transmission of the uplink data in a second transmission manner. The second transmission manner includes at least one of the following: an early data transmission (early data transmission, EDT) manner, a preconfigured uplink resource (preconfigured uplink resource, PUR) transmission manner, or a random access transmission manner.

In the EDT transmission manner, the terminal device may select a random access preamble configured for the EDT to initiate random access, and after obtaining an uplink time-frequency resource, may send the uplink data to the access network device on the uplink time-frequency resource. The EDT may be classified into mobile originated early data transmission (mobile originated early data transmission, MO-EDT) and mobile terminated early data transmission (mobile terminated early data transmission, MT-EDT). The MO-EDT is triggered when the following conditions are satisfied: (1) The upper layer or the higher layer have requested to set up or resume an RRC connection for mobile originated data transmission. (2) A size of the uplink data is less than or equal to a size of a TB indicated in a system message. The MT-EDT is used for a single time of downlink data transmission in a random access procedure. If both the terminal device and the network support the MT-EDT, and the terminal device has downlink data to be transmitted, the MT-EDT is initiated by a core network.

In the PUR transmission manner, the terminal device may request a PUR and obtain a PUR configuration in a previous RRC connection. In the RRC_IDLE state, the PUR configuration is maintained. Transmission using the PUR allows a single time of uplink transmission performed, using a preconfigured uplink resource, in an RRC_IDLE state, without performing a random access procedure. When the upper layer requests to set up or resume an RRC connection, and the terminal device has a valid PUR for transmission and a timing advance (timing advance, TA) verification criterion, the transmission using the PUR is triggered.

An uplink time-frequency resource used in the EDT transmission manner is obtained in a random access manner, and an uplink time-frequency resource used in the PUR transmission manner is a dedicated resource preconfigured by the access network device for the terminal device.

In the random access transmission manner, the terminal device may transmit the uplink data to the access network device in the connected state. For specific implementations of the EDT transmission manner, the PUR transmission manner, and the random access transmission manner, refer to a related mature technology. Details are not described in this application.

In a possible design, when the terminal device sends the uplink data on the first time-frequency resource, the first target time is not later than second target time corresponding to a second time-frequency resource, and the second time-frequency resource is a time-frequency resource used in the second transmission manner. It may be understood that the second time-frequency resource occurs periodically (where if the second time-frequency resource occurs only once, this may be understood as a single periodicity). The second target time described in this specification is time of a latest valid second time-frequency resource after the uplink data (for example, the uplink data sent by the terminal device on the first time-frequency resource) is generated or arrives, or time of the second time-frequency resource in a 1^{st} periodicity after the uplink data is generated or arrives, or time of a first time-frequency resource in a periodicity after the uplink data is generated or arrives. The second target time may be start time corresponding to the second time-frequency resource, or may be end time corresponding to the second time-frequency resource.

For example, after uplink data 1 arrives, the terminal device may separately determine the first target time and the second target time based on arrival time of the uplink data 1, and send the uplink data on the first time-frequency resource when the first target time is not later than the second target time.

As described above, the second time-frequency resource may be an EDT configuration/resource, a PUR configuration/resource, or a resource allocated in a random access procedure. In this design, when the terminal device supports the first transmission manner and the second transmission manner, whether the first target time corresponding to the first time-frequency resource is not later than the second target time corresponding to the second time-frequency resource may be first determined. For a definition of the second target time, refer to a definition of the first target time. Details are not described again. When the first target time is not later than the second target time, the terminal device may send the uplink data on the first time-frequency resource in the first transmission manner.

In other words, in this design, before sending the uplink data on the first time-frequency resource, the terminal device needs to determine that a satisfied preset condition includes: The first target time is not later than the second target time.

Optionally, when the first target time is later than the second target time, the terminal device may transmit the uplink data in the second transmission manner. When there are a plurality of second transmission manners, the terminal device may select one of the manners to transmit the uplink data. This is not limited herein.

In this design, when the first target time is not later than the second target time corresponding to the second time-frequency resource, the terminal device sends the uplink data on the first time-frequency resource in the first transmission manner. This can ensure a transmission delay of the uplink data, and improve transmission efficiency of data.

In some possible implementations, that when the terminal device sends the uplink data on the first time-frequency resource, the first target time is not later than the second target time corresponding to the second time-frequency resource may include: The first target time is not later than the second target time corresponding to the second time-frequency resource, and a time difference between the first target time and the second target time is greater than a first time threshold.

In other words, before sending the uplink data on the first time-frequency resource, the terminal device needs to determine that a satisfied preset condition includes: The first target time not only needs to be not later than the second target time, but also the time difference between the first target time and the second target time needs to be greater than the first time threshold.

When the first target time is not later than the second target time, and the time difference between the first target time and the second target time is greater than the first time threshold, the terminal device may send the uplink data on the first time-frequency resource in the first transmission manner. When the first target time is not later than the second target time, but the time difference between the first target time and the second target time is less than the first time threshold, the terminal device may transmit the uplink data in the second transmission manner. Optionally, when the first target time is not later than the second target time, but the time difference between the first target time and the second target time is equal to the first time threshold, it may be equivalent to a case in which the time difference is greater than the first time threshold, or may be equivalent to a case in which the time difference is less than the first time threshold. Details are not described again. A value of the first time threshold is not limited in this application.

In some other possible implementations, when the terminal device sends the uplink data on the first time-frequency resource, the first target time may alternatively be later than the second target time corresponding to the second time-frequency resource, but the time difference between the first target time and the second target time is less than a second time threshold.

In other words, before sending the uplink data on the first time-frequency resource, the terminal device needs to determine that a satisfied preset condition includes: Duration in which the first target time is later than the second target time is less than the second time threshold. For example, the second time threshold may be round trip time between the terminal device and the access network device.

When the first target time is not later than the second target time, or the first target time is later than the second target time, but the time difference between the first target time and the second target time is less than the second time threshold, the terminal device may send the uplink data on the first time-frequency resource in the first transmission manner. When the first target time is later than the second target time, and the time difference between the first target time and the second target time is greater than the second time threshold, the terminal device may transmit the uplink data in the second transmission manner. Optionally, when the first target time is later than the second target time, and the time difference between the first target time and the second target time is equal to the second time threshold, it may be equivalent to a case in which the time difference is less than the second time threshold, or may be equivalent to a case in which the time difference is greater than the second time threshold. Details are not described again. A value of the second time threshold is not limited in this application either.

Optionally, the first time threshold and/or the second time threshold may be configured by the access network device for the terminal device. Alternatively, the first time threshold and/or the second time threshold may be written into the terminal device in a preconfigured or predefined manner. A manner in which the terminal device obtains the first time threshold and/or the second time threshold is not limited in this application.

It may be understood that in this embodiment of this application, when the serving cell is an NTN cell, for example, an NTN cell covered by a satellite, the first target time corresponding to the first time-frequency resource may be later than service end time of the serving cell due to high-speed movement of the satellite.

In a possible design, the method may further include: The terminal device obtains the service stop time of the serving cell. When the terminal device sends the uplink data on the first time-frequency resource, the service stop time is later than the first target time.

In other words, before sending the uplink data on the first time-frequency resource, the terminal device needs to determine that a satisfied preset condition includes: The service stop time is later than the first target time.

When the service stop time is later than the first target time, the terminal device may send the uplink data on the first time-frequency resource in the first transmission manner. When the service stop time is not later than (for example, earlier than) the first target time, the terminal device may transmit the uplink data in the second transmission manner, or select another occasion to transmit the uplink data.

In this design, when the service stop time of the serving cell is later than the first target time, the terminal device sends the uplink data on the first time-frequency resource, so that a transmission success rate of the uplink data can be improved.

In a possible implementation of this design, a manner in which the terminal device obtains the service stop time of the serving cell may include: The access network device sends the service stop time of the serving cell. Correspondingly, the terminal device receives the service stop time of the serving cell.

For example, the serving cell may be a quasi-fixed cell, and the access network device may broadcast the service stop time of the serving cell. The terminal device may receive broadcast message, to obtain the service stop time of the serving cell.

In another possible implementation of this design, a manner in which the terminal device obtains the service stop time of the serving cell may include: The terminal device derives the service stop time of the serving cell based on information about the serving cell broadcast by the access network device (for example, a base station).

For example, the serving cell may be a mobile cell. The access network device may broadcast a reference point, a radius (or a threshold), ephemeris information, timestamp information corresponding to the reference point, and the like of the serving cell. The terminal device may derive the service stop time of the mobile cell based on broadcast message.

A specific manner in which the terminal device obtains the service stop time of the serving cell is not limited in this application.

Optionally, in some possible designs, when the terminal device sends the uplink data on the first time-frequency resource, the service stop time is later than the first target time, and the time difference between the service stop time and the first target time is greater than the round trip time between the terminal device and the access network device, or is greater than a half of the round trip time, or is greater than a specific time threshold.

In other words, before sending the uplink data on the first time-frequency resource, the terminal device needs to determine that a satisfied preset condition includes: The service stop time is later than the first target time, and a time difference between the service stop time and the first target time is greater than the round trip time between the terminal device and the access network device, or is greater than the half of the round trip time, or is greater than the specific time threshold.

When the service stop time is later than the first target time, and the time difference between the service stop time and the first target time is greater than the round trip time between the terminal device and the access network device, or is greater than the half of the round trip time, or is greater than the specific time threshold, the terminal device may send the uplink data on the first time-frequency resource in the first transmission manner. When the service stop time is not later than the first target time, or is later than the first target time, but the time difference between the service stop time and the first target time is less than the round trip time between the terminal device and the access network device, or is greater than the half of the round trip time, or is greater than the specific time threshold, the terminal device may transmit the uplink data in the second transmission manner, or select another occasion to transmit the uplink data. A case in which the time difference is equal to the round trip time (or the half of the round trip time, or the foregoing specific time threshold) may be equivalent to a case in which the time difference is greater than or less than the round trip time. Details are not described again.

The round trip time (round trip time, RTT) between the terminal device and the access network device may be described as "UE-eNB/gNB RTT". An NTN is used as an example. The round trip time may be defined as a sum of a timing advance value of the terminal device and k-Mac. k-Mac is a scheduling offset provided by a network when downlink frame timing and uplink frame timing are not aligned at a gNB, and a value of k-Mac may be 0 or another value. The round trip time may be rounded off in a unit of a slot (slot) or a subframe, or may not be rounded off.

For example, FIG. 7 is a diagram of a time sequence relationship between service stop time and first target time according to an embodiment of this application. As shown in FIG. 7, time at which uplink data arrives may be denoted as t0, time at which the uplink data is sent (that is, the first target time) may be referred to as t1, service stop time of a serving cell may be denoted as t2, and round trip time may be denoted as RTT. In terms of a time sequence, t2 may be greater than (t1+RTT).

For example, that a time difference between the service stop time and the first target time is greater than the round trip time between the terminal device and the access network device may include: The time difference between the service stop time and the first target time is equal to a sum of the round trip time between the terminal device and the access network device and first duration. For example, duration between t2 and (t1+RTT) in FIG. 7 may be the first duration.

Alternatively, the RTT in FIG. 7 may be replaced with a half of the round trip time or duration of a specific time threshold. Details are not described again.

In an implementation, the first duration may be time corresponding to a second quantity of unit time. The unit time may be a frame, a subframe, a slot, a time domain symbol, or the like. For example, the unit time may be a frame, and the second quantity is 0, 4, or another value. A value of the second quantity and a granularity of the unit time are not limited in this application.

In another implementation, the first duration may be duration of a response window for monitoring, after the terminal device sends the uplink data to the access network device, data delivered by the access network device. It should be understood that after receiving the uplink data sent by the terminal device, the access network device may send a response message to the terminal device. The terminal device may monitor the response message in the response window. For details about implementation of the response message, refer to the following descriptions.

In still another implementation, the first duration may alternatively be less than or greater than duration of a response window. This is not limited in this application.

In some other implementations, the first duration may alternatively be a sum of duration of a response window and time corresponding to a second quantity of unit time.

In this design, when the terminal device sends the uplink data on a first time-frequency resource, the service stop time is later than the first target time, and the time difference between the service stop time and the first target time is greater than the round trip time or the half of the round trip time between the terminal device and the access network device, or is greater than the specific time threshold (for example, referred to as a third time threshold, where the third time threshold may be greater than or less than the round trip time), so that a success rate of sending the uplink data can be improved, and a success rate of the terminal device receiving a response message from the access network device for the uplink data can also be improved.

Alternatively, in some other possible designs, when the terminal device sends the uplink data on the first time-frequency resource, the service stop time is later than the first target time, and the time difference between the service stop time and the first target time may be equal to the round trip time between the terminal device and the access network device, or may be equal to the half of the round trip time, or may be equal to the specific time threshold. This is not limited in this application.

Optionally, in this embodiment of this application, after sending the uplink data, in a process in which the terminal device starts the response window to monitor the data delivered by the access network device, if the response window does not expire when the service stop time of the serving cell reaches, for example, the sum of the round trip time between the terminal device and the access network device and the first duration is less than the duration of the response window, the terminal device may actively stop or stop monitoring the response window, thereby reducing a waste of power consumption.

In a possible design, the method further includes: The access network device sends a transport block threshold. Correspondingly, the terminal device receives the transport block (transport block, TB) threshold that is from the access network device. When the terminal device sends the uplink data on the first time-frequency resource, a size of the uplink data is less than the transport block threshold.

In this design, that the size of the uplink data is less than the transport block threshold may also be considered as a preset condition that needs to be satisfied when the terminal device sends the uplink data in the first transmission manner. The terminal device may first determine whether the size of the uplink data is less than the transport block threshold. When the size of the uplink data is less than the transport block threshold, the terminal device sends the uplink data on the first time-frequency resource in the first transmission manner. When the size of the uplink data is greater than the transport block threshold, the terminal device may transmit the uplink data in the second transmission manner. For a case in which the size of the uplink data is equal to the transport block threshold, refer to a case in which the size of the uplink data is less than or greater than the transport block threshold. Details are not described again.

In some possible implementations, the transport block threshold and the first configuration information may be sent by the access network device to the terminal device by using the message that carries the first configuration information. In some other possible implementations, the access network device may alternatively send the transport block threshold to the terminal device by using another message, for example, another broadcast message or unicast message. This is not limited herein.

Alternatively, the transport block threshold may be written into the terminal device in a preconfigured or predefined manner. A manner in which the terminal device obtains the transport block threshold is not limited in this application.

This design can improve transmission efficiency of the uplink data.

In a possible design, a time alignment timer is still running when the uplink data is sent on the first time-frequency resource.

The time alignment timer (TimeAlignmentTimer) is used for time alignment and synchronization between the terminal device and the access network device.

In this design, that the time alignment timer is still running may also be considered as a preset condition that needs to be satisfied when the terminal device sends the uplink data in the first transmission manner. The terminal device may first determine whether the time alignment timer is still running. When the time alignment timer is still running, the terminal device sends the uplink data on the first time-frequency resource in the first transmission manner. When the time alignment timer ends, the terminal device may transmit the uplink data in the second transmission manner.

In some possible implementations, the time alignment timer may be configured by the access network device and maintained by the terminal device.

In some other possible implementations, the time alignment timer may alternatively be maintained by the terminal device based on signaling, or may be independently maintained by the terminal device. This is not limited herein.

This design can improve stability of transmission of the uplink data.

In a possible design, the method further includes: The terminal device sends identification information of the terminal device on the first time-frequency resource. Correspondingly, the access network device receives the identification information of the terminal device. In other words, the identification information of the terminal device is carried on the first time-frequency resource.

For example, in an evolved packet system (evolved packet system, EPS), the identification information of the terminal device may be a system architecture evolution (system architecture evolution, SAE) temporary mobile subscriber identity (temporary mobile subscriber identity, TMSI), which is referred to as an S-TMSI for short. In a 5G system (5th generation system, 5GS), the identification information of the terminal device may be a 5G-temporary mobile subscriber identity (5G-temporary mobile subscriber identity, 5G-TMSI).

Alternatively, the identification information of the terminal device may be represented in another manner. This is not limited in this application.

Optionally, the identification information of the terminal device and the first configuration information may be carried in a same message, in other words, the message that carries the first configuration information includes the identification information of the terminal device.

In a possible design, the method further includes: The terminal device sends first information on the first time-frequency resource, where the first information indicates that a transmission manner of the uplink data is the first transmission manner. Correspondingly, the access network device receives the first information, where the first information is carried on the first time-frequency resource.

For example, the first information may be a field, for example, may be a modified or newly added field of an existing field. The first information and the first configuration information may be carried in a same message, in other words, the message that carries the first configuration information includes the first information. For example, the message that carries the first configuration information is the first message. The first information may indicate, to the access network device, that a reason or a cause for sending the first information by the terminal device is sending the uplink data in the first transmission manner, or indicate that current uplink transmission is performed in the first transmission manner.

The following describes a response process of the access network device to the uplink data sent by the terminal device in this embodiment of this application.

In a possible scenario, the access network device successfully receives the uplink data, and has no downlink data to be sent. The access network device may send a layer 1 acknowledgment (L1 acknowledgment, L1 ACK) feedback message to the terminal device. The L1 ACK feedback message indicates acknowledgment of receiving the uplink data.

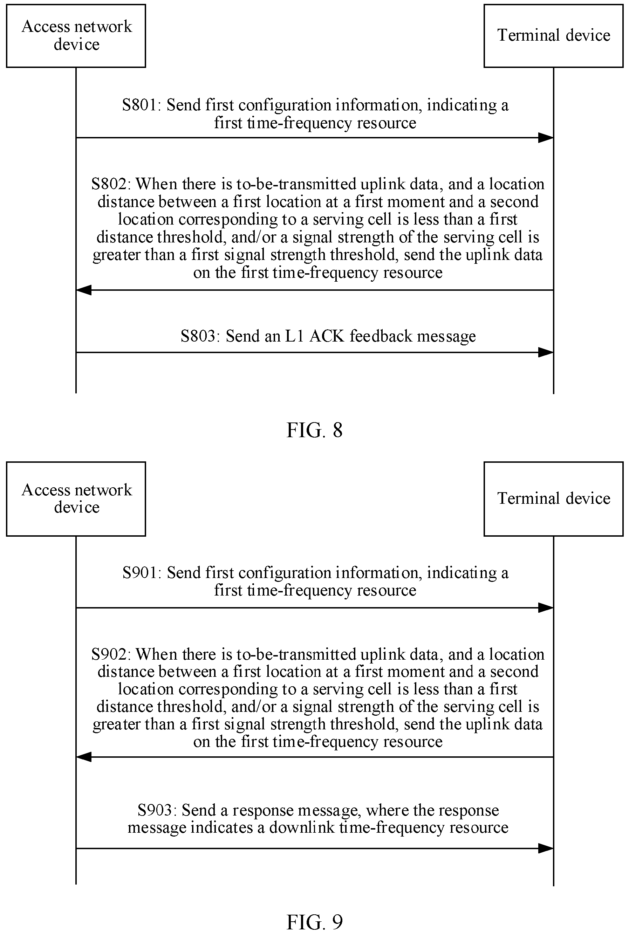

For example, FIG. 8 is another schematic flowchart of a communication method according to an embodiment of this application. As shown in FIG. 8, the communication method may include S801 to S803.

S801: An access network device sends first configuration information, where the first configuration information indicates a first time-frequency resource.

Correspondingly, a terminal device may receive the first configuration information that is from the access network device.

S802: When there is to-be-transmitted uplink data, and a location distance between a first location of the terminal device at a first moment and a second location corresponding to a serving cell is less than a first distance threshold, and/or a signal strength of the serving cell is greater than a first signal strength threshold, the terminal device sends the uplink data on the first time-frequency resource.

Correspondingly, the access network device receives the uplink data.

For S801 and S802, refer to the foregoing descriptions of S601 and S602. Details are not described again.

S803: The access network device sends an L1 ACK feedback message to the terminal device.

Correspondingly, the terminal device receives the L1 ACK feedback message.

The L1 ACK feedback message may be transmitted through a physical downlink control channel (physical downlink control channel, PDCCH).

In another possible scenario, the access network device successfully receives the uplink data, and has downlink data to be sent. The access network device may send, to the terminal device, a response message indicating a downlink time-frequency resource for the downlink data. The response message indicates acknowledgment of receiving the uplink data.

For example, FIG. 9 is still another schematic flowchart of a communication method according to an embodiment of this application. As shown in FIG. 9, the communication method may include S901 to S903.

S901: An access network device sends first configuration information, where the first configuration information indicates a first time-frequency resource.

Correspondingly, a terminal device may receive the first configuration information that is from the access network device.

S902: When there is to-be-transmitted uplink data, and a location distance between a first location of the terminal device at a first moment and a second location corresponding to a serving cell is less than a first distance threshold, and/or a signal strength of the serving cell is greater than a first signal strength threshold, the terminal device sends the uplink data on the first time-frequency resource.

Correspondingly, the access network device receives the uplink data.

For S901 and S902, refer to the foregoing descriptions of S601 and S602. Details are not described again.

S903: The access network device sends a response message to the terminal device, where the response message indicates a downlink time-frequency resource.

Correspondingly, the terminal device receives the response message. The terminal device may learn, based on the response message, that the access network device successfully receives the uplink data, and may receive downlink data based on the downlink time-frequency resource indicated by the response message.

The response message may be transmitted through a PDCCH, and the downlink data may be transmitted through a physical downlink shared channel (physical downlink shared channel, PDSCH).

In still another possible scenario, the access network device may further need to indicate the terminal device to retransmit the uplink data. The access network device may send a response message, that is, a layer 1 non-acknowledgment (L1 non-acknowledgment, L1 NACK) feedback message to the terminal device. The L1 NACK feedback message may also be referred to as a negative feedback message, and indicates that the uplink data is not received or the uplink data needs to be retransmitted.

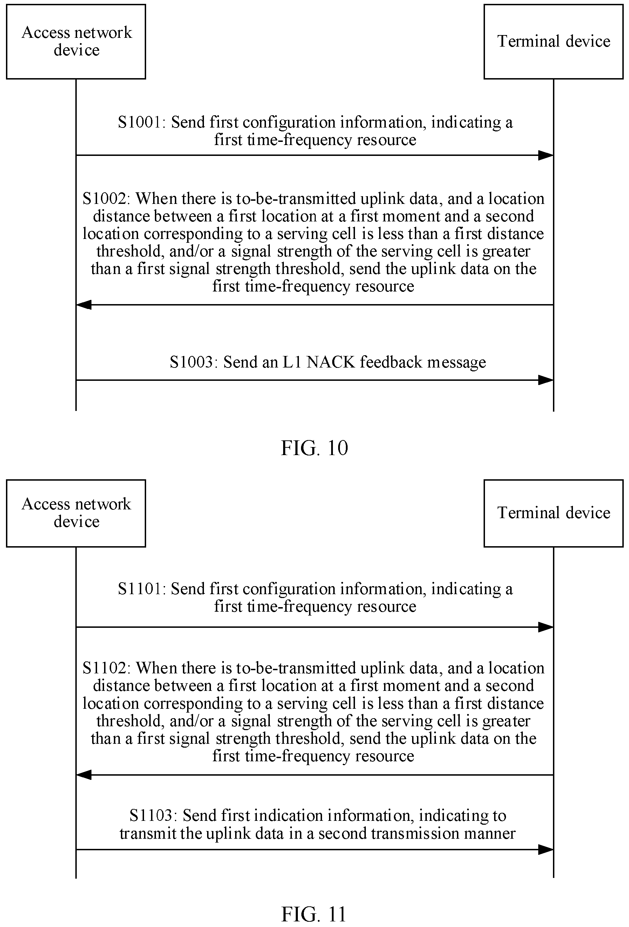

For example, FIG. 10 is still another schematic flowchart of a communication method according to an embodiment of this application. As shown in FIG. 10, the communication method may include S1001 to S1003.

S1001: An access network device sends first configuration information, where the first configuration information indicates a first time-frequency resource.

Correspondingly, a terminal device may receive the first configuration information that is from the access network device.

S1002: When there is to-be-transmitted uplink data, and a location distance between a first location of the terminal device at a first moment and a second location corresponding to a serving cell is less than a first distance threshold, and/or a signal strength of the serving cell is greater than a first signal strength threshold, the terminal device sends the uplink data on the first time-frequency resource.

Correspondingly, the access network device receives the uplink data.

For S1001 and S1002, refer to the foregoing descriptions of S601 and S602. Details are not described again.

S1003: The access network device sends an L1 NACK feedback message to the terminal device.

Correspondingly, the terminal device receives the L1 NACK feedback message.

The L1 NACK feedback message may be transmitted through a physical downlink control channel (physical downlink control channel, PDCCH), and indicates that the uplink data needs to be retransmitted.

Optionally, the access network device may further send retransmission resource indication information to the terminal device, where the retransmission resource indication information indicates an uplink retransmission resource (also referred to as an uplink scheduling resource used for retransmission).

For example, the retransmission resource indication information may be transmitted through the PDCCH, for example, included in the L1 NACK feedback message. Alternatively, the retransmission resource indication information may be transmitted through a PDSCH, for example, sent by using a broadcast message. This is not limited herein.

In still another possible scenario, the access network device may further send first indication information to the terminal device, where the first indication information indicates to transmit the uplink data in a second transmission manner.

For example, FIG. 11 is still another schematic flowchart of a communication method according to an embodiment of this application. As shown in FIG. 11, the communication method may include S1101 to S1103.

S1101: An access network device sends first configuration information, where the first configuration information indicates a first time-frequency resource.

Correspondingly, a terminal device may receive the first configuration information that is from the access network device.

S1102: When there is to-be-transmitted uplink data, and a location distance between a first location of the terminal device at a first moment and a second location corresponding to a serving cell is less than a first distance threshold, and/or a signal strength of the serving cell is greater than a first signal strength threshold, the terminal device sends the uplink data on the first time-frequency resource.

Correspondingly, the access network device receives the uplink data.

For S1101 and S1102, refer to S601 and S602. Details are not described again.

S1103: The access network device sends first indication information to the terminal device, where the first indication information indicates to transmit the uplink data in a second transmission manner.

Correspondingly, the terminal device receives the first indication information. The terminal device may resend the uplink data in the second transmission manner based on the first indication information.

In an implementation, the access network device may receive the uplink data sent in S1102, but cannot successfully parse the uplink data. The access network device may perform S1103 to indicate the terminal device to transmit the uplink data in the second transmission manner. As described in the foregoing embodiment, the second transmission manner may be an EDT transmission manner, a PUR transmission manner, or a random access transmission manner. This is not limited herein.

Optionally, in this implementation, the first indication information may be carried in the L1 NACK feedback message, or may be carried in another message.

In another implementation, the access network device may receive the uplink data sent in S1102, and the access network device has more downlink data to be sent to the terminal device. The access network device may perform S1103 to indicate the terminal device to transmit the uplink data in the second transmission manner. The second transmission manner may be a random access transmission manner.

Optionally, in this implementation, the first indication information may be carried in the response message indicating the downlink time-frequency resource or the L1 ACK feedback message, or may be carried in another message.

The first indication information may also be referred to as a fallback indication.

In a possible design, the access network device may scramble the physical downlink control channel by using a first radio network temporary identifier. The first configuration information further includes the first radio network temporary identifier. The method further includes: The terminal device monitors the physical downlink control channel based on the first radio network temporary identifier, where the physical downlink control channel is scrambled by using the first radio network temporary identifier. That is, the first radio network temporary identifier is used for monitoring the physical downlink control channel.

For example, the first radio network temporary identifier (radio network temporary identifier, RNTI) may be an RNTI dedicated to the first transmission manner, for example, referred to as an RNTI used for PRACH-free EDT or a contention-based PUR.

For example, the terminal device may monitor the physical downlink control channel, to obtain information delivered by the access network device. The L1 ACK feedback message is used as an example. When delivering the L1 ACK feedback message, the access network device may scramble the physical downlink control channel by using the first RNTI, and the terminal device may descramble based on the first RNTI to obtain the L1 ACK feedback message.

Optionally, before sending the uplink data, the terminal device may determine whether the first configuration information includes the first RNTI, and when determining that the first configuration information includes the first RNTI, send the uplink data on the first time-frequency resource in the first transmission manner. Otherwise, the terminal device may transmit the uplink data in the second transmission manner.

In a possible design, the monitoring the physical downlink control channel includes: starting to monitor the physical downlink control channel at a third moment after transmission of the uplink data ends. An interval between the third moment and time at which the transmission of the uplink data ends is a first quantity of unit time.

For example, it is assumed that the transmission of the uplink data ends at a moment t1 (that is, sending of the uplink data is completed), and the third moment is a moment t2, t2 is after t1, and the first quantity of unit time exists between t2 and t1. The terminal device may start to monitor the physical downlink control channel at the moment t2.

Optionally, similar to the foregoing embodiment, in this design, the unit time may be a frame, a subframe, a slot, a time domain symbol, or the like. For example, in an example in which the unit time is a subframe, the first quantity may be a sum of a first value and a second value. The first value is 0, 4, or another value. The second value is a quantity of subframes corresponding to round trip time between the terminal device and the access network device. A value of the first quantity and a granularity of the unit time are not limited in this application.

In this design, the terminal device may start to monitor the physical downlink control channel after the transmission of the uplink data ends, so that unnecessary power consumption can be reduced. It should be understood that the monitoring the physical downlink control channel in this application is to monitor a physical downlink control channel scrambled by using the first RNTI.

In a possible design, the first configuration information further includes response window configuration information, and the response window configuration information indicates duration of a response window. The monitoring the physical downlink control channel includes: monitoring the physical downlink control channel in the response window.

For example, the terminal device may start the response window at the third moment, to start to monitor the physical downlink control channel scrambled by using the first RNTI. The response window may alternatively be a timer, for example, a response window timer. Start time of the response window may be configured or set by default. For example, the access network device may indicate the terminal device to start the response window for monitoring at an interval of several subframes, slots, or symbols after the transmission of the uplink data ends.

It should be understood that, when the terminal device does not receive, within duration of the response window or during running, the information delivered by the access network device, the response window expires upon expiration of the duration.

Optionally, the terminal device may transmit the uplink data in the second transmission manner after the response window expires.

For example, after the response window expires, the terminal device may indicate, to a higher layer, that transmission in the first transmission manner fails, and the terminal device may transmit the uplink data in the second transmission manner. For the second transmission manner, refer to the descriptions in the foregoing embodiment.

It should be further noted that before the response window expires, the terminal device may actively stop the response window (that is, stop monitoring the physical downlink control channel), or stop responding to the response window. For example, in the scenario shown in FIG. 8, after receiving the L1 ACK feedback, the terminal device may actively stop the response window, to reduce unnecessary power consumption. In the scenario shown in FIG. 9, after receiving the response message and successfully decoding the downlink data, the terminal device may also actively stop the response window, to reduce unnecessary power consumption. In the scenario shown in FIG. 11, after receiving the first indication information, the terminal device may actively stop the response window, and switch to the second transmission manner to transmit the uplink data.

Different from the foregoing manner of actively stopping the response window, in the scenario shown in FIG. 10, after receiving the L1 NACK feedback message indicating that the uplink data needs to be retransmitted, the terminal device may retransmit the uplink data, and restart the response window (equivalent to actively stopping the original response window). For example, the terminal device may restart the response window at a moment after the retransmission of the uplink data ends. For the moment, refer to implementation of the third moment. Details are not described again.

Based on the foregoing embodiments, embodiments of this application actually provide a method that can be applied to the terminal device and a method that can be applied to the access network device. For the method applied to the terminal device, refer to the steps performed by the terminal device in the foregoing embodiments. For the method applied to the access network device, refer to the steps performed by the access network device in the foregoing embodiments.

It should be noted that, for brief description, the foregoing method embodiments are described as a series of actions. However, a person skilled in the art should appreciate that this application is not limited to the described order of the actions, because according to this application, some steps may be performed in other orders or simultaneously. It should be further appreciated by a person skilled in the art that embodiments described in this specification all belong to example embodiments, and the involved actions and modules are not necessarily required for this application.

The foregoing mainly describes the solutions provided in embodiments of this application from a perspective of interaction between network elements. It may be understood that, to implement the foregoing functions, the network elements, such as the terminal device and the access network device, include corresponding hardware structures and/or software modules for performing the functions.

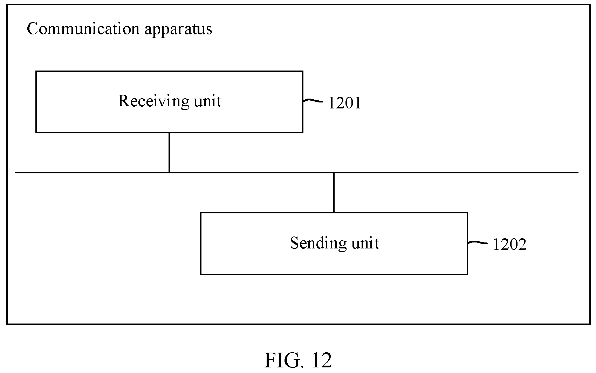

For example, an embodiment of this application may provide a communication apparatus configured to implement a function of the foregoing terminal device. The communication apparatus may be a terminal device, or may be an apparatus (for example, a chip) built in the terminal device. FIG. 12 is a diagram of a structure of a communication apparatus according to an embodiment of this application. As shown in FIG. 12, the communication apparatus may include a receiving unit 1201 and a sending unit 1202.

The receiving unit 1201 is configured to receive first configuration information from an access network device, where the first configuration information indicates a first time-frequency resource.

The sending unit 1202 is configured to: when there is to-be-transmitted uplink data, and a location distance between a first location of a terminal device at a first moment and a second location corresponding to a serving cell is less than a first distance threshold, and/or a signal strength of the serving cell is greater than a first signal strength threshold, send the uplink data on the first time-frequency resource, where the first moment is an arrival moment of the uplink data or first target time corresponding to the first time-frequency resource.

In a possible design, the second location is a location of the terminal device at a second moment, and the second moment is a moment at which the first configuration information is received.

Alternatively, in another possible design, the second location is a location of a reference point corresponding to the serving cell.

In a possible design, when the uplink data is sent on the first time-frequency resource, the first target time is not later than second target time corresponding to a second time-frequency resource, and the second time-frequency resource is a time-frequency resource used in a second transmission manner. The second transmission manner includes at least one of the following: an early data transmission manner, a preconfigured uplink resource transmission manner, or a random access transmission manner.

Optionally, a time difference between the first target time and the second target time is greater than a first time threshold.

In a possible design, the receiving unit 1201 is further configured to obtain service stop time of the serving cell. When the sending unit 1202 sends the uplink data on the first time-frequency resource, the service stop time is later than the first target time.

Optionally, when the sending unit 1202 sends the uplink data on the first time-frequency resource, the service stop time is later than the first target time, and a time difference between the service stop time and the first target time is greater than round trip time between the terminal device and the access network device.

In a possible design, the sending unit 1202 is further configured to: when the service stop time is earlier than the first target time, transmit the uplink data in the second transmission manner.

Alternatively, in another possible design, the sending unit 1202 is further configured to: when the service stop time is later than the first target time, and the time difference between the service stop time and the first target time is less than the round trip time between the terminal device and the access network device, transmit the uplink data in the second transmission manner.

In a possible design, the receiving unit 1201 is further configured to receive a transport block threshold that is from the access network device. When the sending unit 1202 sends the uplink data on the first time-frequency resource, a size of the uplink data is less than the transport block threshold.

In a possible design, a time alignment timer is still running when the sending unit 1202 sends the uplink data on the first time-frequency resource.

In a possible design, the receiving unit 1201 is further configured to receive the first distance threshold that is from the access network device.

In a possible design, the receiving unit 1201 is further configured to receive the first signal strength threshold that is from the access network device.

In a possible design, the sending unit 1202 is further configured to send identification information of the terminal device on the first time-frequency resource.

In a possible design, the sending unit 1202 is further configured to send first information on the first time-frequency resource, where the first information indicates that a transmission manner of the uplink data is the first transmission manner.

In a possible design, the first configuration information further includes a first radio network temporary identifier. The receiving unit 1201 is further configured to monitor a physical downlink control channel based on the first radio network temporary identifier, where the physical downlink control channel is scrambled by using the first radio network temporary identifier.

In a possible design, the receiving unit 1201 is specifically configured to start to monitor the physical downlink control channel at a third moment after transmission of the uplink data ends. An interval between the third moment and time at which the transmission of the uplink data ends is a first quantity of unit time.

In a possible design, the first configuration information further includes response window configuration information, and the response window configuration information indicates duration of a response window. The receiving unit 1201 is specifically configured to monitor the physical downlink control channel in the response window.

Optionally, the sending unit 1202 is further configured to: transmit the uplink data in the second transmission manner after the response window expires.

In a possible design, the receiving unit 1201 is further configured to receive first indication information, where the first indication information indicates to transmit the uplink data in the second transmission manner. After receiving the first indication information, the receiving unit 1201 stops monitoring the physical downlink control channel.

In a possible design, the first configuration information is carried in a broadcast message or a dedicated message, and the first time-frequency resource is a common time-frequency resource shared by different terminal devices.

Optionally, the communication apparatus shown in FIG. 12 may further include a processing unit, configured to implement a data processing function. This is not limited herein.

Similarly, an embodiment of this application may further provide a communication apparatus configured to implement a function of the foregoing access network device. The communication apparatus may be an access network device, or may be an apparatus (for example, a chip) built in the access network device. For implementation of the communication apparatus, refer to FIG. 12, and the implementation is not shown in the accompanying drawings.

For example, the communication apparatus may include a sending unit, a receiving unit, or the like.

The sending unit is configured to send first configuration information, where the first configuration information indicates a first time-frequency resource.

The receiving unit is configured to receive uplink data that is from a terminal device, where the uplink data is carried on the first time-frequency resource.

A location distance between a first location of the terminal device at a first moment and a second location corresponding to a serving cell is less than a first distance threshold, and/or a signal strength of the serving cell is greater than a first signal strength threshold, where the first moment is an arrival moment of the uplink data or first target time corresponding to the first time-frequency resource.

In a possible design, the second location is a location of the terminal device at a second moment, and the second moment is a moment at which the first configuration information is received.

Alternatively, in another possible design, the second location is a location of a reference point corresponding to the serving cell.

In a possible design, when the uplink data is carried on the first time-frequency resource, the first target time is not later than second target time corresponding to a second time-frequency resource, and the second time-frequency resource is a time-frequency resource used in a second transmission manner. The second transmission manner includes at least one of the following: an early data transmission manner, a preconfigured uplink resource transmission manner, or a random access transmission manner.

Optionally, a time difference between the first target time and the second target time is greater than a first time threshold.

In a possible design, the sending unit is further configured to send service stop time of the serving cell. When the uplink data is carried on the first time-frequency resource, the service stop time is later than the first target time.

Optionally, when the uplink data is carried on the first time-frequency resource, the service stop time is later than the first target time, and a time difference between the service stop time and the first target time is greater than round trip time between the terminal device and the access network device.

In a possible design, the sending unit is further configured to send a transport block threshold. A size of the uplink data is less than the transport block threshold.

In a possible design, the sending unit is further configured to send the first distance threshold.

In a possible design, the sending unit is further configured to send the first signal strength threshold.

In a possible design, the receiving unit is further configured to receive identification information of the terminal device, where the identification information of the terminal device is carried on the first time-frequency resource.

In a possible design, the receiving unit is further configured to receive first information, where the first information is carried on the first time-frequency resource, and the first information indicates that a transmission manner of the uplink data is the first transmission manner.

In a possible design, the first configuration information further includes a first radio network temporary identifier, and the first radio network temporary identifier is used for monitoring a physical downlink control channel, where the physical downlink control channel is scrambled by using the first radio network temporary identifier.

In a possible design, the first configuration information further includes response window configuration information, and the response window configuration information indicates duration of a response window.

In a possible design, the sending unit is further configured to send first indication information to the terminal device, where the first indication information indicates to transmit the uplink data in the second transmission manner.

In a possible design, the first configuration information is carried in a broadcast message or a dedicated message, and the first time-frequency resource is a common time-frequency resource shared by different terminal devices.

It should be understood that division of the units in the foregoing apparatus is merely logical function division. During actual implementation, all or some of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware.

For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, the units may be all or partially integrated, or may be implemented independently. The processing element herein may also be referred to as a processor, and may be an integrated circuit with a signal processing capability. During implementation, the steps in the foregoing methods or the foregoing units may be implemented through a hardware integrated logic circuit in a processor element, or may be implemented in a form of software invoked by the processing element.

In an example, a unit in any one of the foregoing apparatuses may be one or more integrated circuits configured to implement the foregoing methods, for example, one or more application-specific integrated circuits (application-specific integrated circuits, ASICs), or one or more digital signal processing (digital signal processing, DSP) circuits, or one or more field programmable gate arrays (field programmable gate arrays, FPGAs), or a combination of at least two of these integrated circuit forms.

For another example, when a unit in the apparatus may be implemented in a manner in which a processing element schedules a program, the processing element may be a general-purpose processor, such as a CPU or another processor that can invoke a program. For still another example, the units may be integrated and implemented in a form of a system-on-a-chip (system-on-a-chip, SoC).

The foregoing receiving unit is an interface circuit or an input circuit of the apparatus, and is configured to receive a signal from another apparatus. For example, when the apparatus is implemented in a form of a chip, the receiving unit is an interface circuit or an input circuit used by the chip to receive a signal from another chip or apparatus. When the communication apparatus includes the sending unit, the sending unit is an interface circuit or an output circuit of the apparatus, and is configured to send a signal to another apparatus. For example, when the apparatus is implemented in a form of a chip, the sending unit is an interface circuit or an output circuit used by the chip to send a signal to another chip or apparatus.

For example, an embodiment of this application may further provide a communication apparatus. The communication apparatus may include a processor and an interface circuit. There may be one or more processors.

When the communication apparatus is used in a terminal device, the processor is configured to: communicate with another apparatus through the interface circuit, and perform the steps performed by the terminal device in the foregoing methods.

When the communication apparatus is used in an access network device, the processor is configured to: communicate with another apparatus through the interface circuit, and perform the steps performed by the access network device in the foregoing methods.

In an implementation, the units of the terminal device or the access network device that respectively implement the corresponding steps in the foregoing methods may be implemented by a processing element by scheduling a program. For example, an apparatus used for the terminal device or the access network device may include a processing element and a storage element. The processing element invokes a program stored in the storage element, to perform the method performed by the corresponding terminal device or the access network device in the foregoing method embodiments. The storage element may be a storage element located on a same chip as the processing element, that is, an on-chip storage element.

In another implementation, a program used to perform the method performed by the terminal device or the access network device in the foregoing methods may be in a storage element located on a chip different from that of the processing element, that is, an off-chip storage element. In this case, the processing element invokes or loads the program from the off-chip storage element to the on-chip storage element, to invoke and perform the method correspondingly performed by the terminal device or the access network device in the foregoing method embodiments.

For example, an embodiment of this application may further provide a communication apparatus. The communication apparatus may include a processor, configured to execute computer instructions stored in a memory. When the computer instructions are executed, the apparatus is caused to perform the method performed by the terminal device or the access network device. The memory may be located inside or outside the communication apparatus. In addition, there are one or more processors.

In still another implementation, the units of the terminal device or the access network device that implement the steps in the foregoing methods may be configured as one or more processing elements. These processing elements may be correspondingly disposed on the terminal device or the access network device. The processing element herein may be an integrated circuit, for example, one or more ASICs, one or more DSPs, one or more FPGAs, or a combination of these integrated circuits. These integrated circuits may be integrated together to form a chip.

The units of the terminal device or the access network device that implement the steps in the foregoing methods may be integrated together, and implemented in a form of an SoC. The SoC chip is configured to implement the corresponding method. At least one processing element and storage element may be integrated into the chip, and the processing element invokes a program stored in the storage element to implement the corresponding method. Alternatively, at least one integrated circuit may be integrated into the chip, to implement the corresponding method. Alternatively, with reference to the foregoing implementations, functions of some units may be implemented by invoking a program by the processing element, and functions of some units may be implemented by the integrated circuit.

As described above, the processing element herein may be a general-purpose processor, for example, a CPU, or may be one or more integrated circuits configured to implement the foregoing methods, for example, one or more ASICs, one or more microprocessors DSPs, one or more FPGAs, or a combination of at least two of the integrated circuits.

The storage element may be one memory, or may be a general term of a plurality of storage elements.

For example, an embodiment of this application further provides a chip system. The chip system may be used in the foregoing terminal device or access network device. The chip system includes one or more interface circuits and one or more processors. The interface circuit and the processor are interconnected through a line. The processor receives and executes computer instructions from a memory of an electronic device through the interface circuit, to implement the method performed by the corresponding terminal device or access network device in the foregoing method embodiments. The electronic device may be a terminal device or an access network device, or a device in the terminal device or the access network device, or may be another device that communicates with the terminal device or the access network device.

The foregoing descriptions about implementations allow a person skilled in the art to understand that, for the purpose of convenient and brief description, division of the foregoing functional modules is used as an example for description. During actual application, the foregoing functions can be allocated to different modules and implemented based on a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, the module or division into the units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such understanding, the technical solutions in embodiments of this application essentially, or a part contributing to a conventional technology, or all or a part of the technical solutions may be implemented in a form of a software product, for example, a program. The software product is stored in a program product, for example, a computer-readable storage medium, and includes several instructions for instructing a device (which may be a single chip microcomputer, a chip, or the like) or a processor (processor) to perform all or some of the steps in the method in embodiments of this application. The foregoing storage medium includes any medium that can store program code, such as a USB flash drive, a removable hard disk, a ROM, a RAM, a magnetic disk, or an optical disc.

For example, an embodiment of this application may further provide a computer-readable storage medium, including computer software instructions. When the computer software instructions are run, the steps performed by the terminal device or the access network device in the method in the foregoing embodiment are implemented.

For example, when the computer software instructions are run in the terminal device or an apparatus (for example, a chip) built in the terminal device, the terminal device is caused to implement the steps performed by the terminal device in the foregoing embodiments.

Alternatively, when the computer software instructions are run in the access network device or an apparatus (for example, a chip) built in the access network device, the access network device is caused to implement the steps performed by the access network device in the foregoing embodiments.

Optionally, an embodiment of this application further provides a communication apparatus. The communication apparatus may include a transceiver unit and a processing unit. The transceiver unit may be configured to send and receive information, or configured to communicate with another network element. The processing unit may be configured to process data. For example, the apparatus may implement, through the transceiver unit and the processing unit, the method performed by the foregoing terminal device or the access network device.

Optionally, an embodiment of this application further provides a computer program product. When the computer program product is executed, the method performed by the terminal device or the access network device may be implemented.

Based on the foregoing embodiments, an embodiment of this application further provides a communication system, including a terminal device and an access network device. The terminal device performs the steps performed by the terminal device in the method in the foregoing embodiments. The access network device performs the steps performed by the access network device in the method described in the foregoing embodiments.

For example, an embodiment of this application further provides a terminal device, which may be configured to implement the method performed by the terminal device in the foregoing embodiments.

For example, an embodiment of this application further provides an access network device, which may be configured to implement the method performed by the access network device in the foregoing embodiments.

It should be understood that descriptions of technical features, technical solutions, beneficial effects, or similar languages in this application do not imply that all features and advantages can be implemented in any single embodiment. On the contrary, it may be understood that descriptions of features or beneficial effects indicate that at least one embodiment includes specific technical features, technical solutions, or beneficial effects. Therefore, descriptions of technical features, technical solutions, or beneficial effects in this specification do not necessarily refer to a same embodiment. Further, the technical features, technical solutions, and beneficial effects described in embodiments may be combined in any appropriate manner. A person skilled in the art may understand that an embodiment may be implemented without one or more specific technical features or technical solutions, or beneficial effect in a specific embodiment. In other embodiments, additional technical features and beneficial effects may also be identified in a specific embodiment that does not reflect all embodiments.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A communication method, wherein the method is applied to a terminal device, and the method comprises:
receiving first configuration information from an access network device, wherein the first configuration information indicates a first time-frequency resource; and
when there is to-be-transmitted uplink data, and a location distance between a first location of the terminal device at a first moment and a second location corresponding to a serving cell is less than a first distance threshold, and/or a signal strength of the serving cell is greater than a first signal strength threshold, sending the uplink data on the first time-frequency resource, wherein
the first moment is an arrival moment of the uplink data or first target time corresponding to the first time-frequency resource.

2. The method according to claim 1, wherein the second location is a location of the terminal device at a second moment or a location of a reference point corresponding to the serving cell, and the second moment is a moment at which the first configuration information is received.

3. The method according to claim 1 or 2, wherein when the uplink data is sent on the first time-frequency resource, the first target time is not later than second target time corresponding to a second time-frequency resource, and the second time-frequency resource is a time-frequency resource used in a second transmission manner; and
the second transmission manner comprises at least one of the following: an early data transmission manner, a preconfigured uplink resource transmission manner, or a random access transmission manner.

4. The method according to claim 3, wherein a time difference between the first target time and the second target time is greater than a first time threshold.

5. The method according to any one of claims 1 to 4, wherein the method further comprises:
obtaining service stop time of the serving cell, wherein
when the uplink data is sent on the first time-frequency resource, the service stop time is later than the first target time.

6. The method according to claim 5, wherein a time difference between the service stop time and the first target time is greater than round trip time between the terminal device and the access network device.

7. The method according to claim 5 or 6, wherein the method further comprises:
when the service stop time is earlier than the first target time, or when the service stop time is later than the first target time, and the time difference between the service stop time and the first target time is less than the round trip time between the terminal device and the access network device, transmitting the uplink data in the second transmission manner.

8. The method according to any one of claims 1 to 7, wherein the method further comprises:
receiving a transport block threshold that is from the access network device, wherein
when the uplink data is sent on the first time-frequency resource, a size of the uplink data is less than the transport block threshold.

9. The method according to any one of claims 1 to 8, wherein a time alignment timer is still running when the uplink data is sent on the first time-frequency resource.

10. The method according to any one of claims 1 to 9, wherein the method further comprises:
receiving the first distance threshold that is from the access network device.

11. The method according to any one of claims 1 to 10, wherein the method further comprises:
receiving the first signal strength threshold that is from the access network device.

12. The method according to any one of claims 1 to 11, wherein the method further comprises:
sending identification information of the terminal device on the first time-frequency resource.

13. The method according to any one of claims 1 to 12, wherein the method further comprises:
sending first information on the first time-frequency resource, wherein the first information indicates that a transmission manner of the uplink data is a first transmission manner.

14. The method according to any one of claims 1 to 13, wherein the first configuration information further comprises a first radio network temporary identifier, and the method further comprises:
monitoring a physical downlink control channel based on the first radio network temporary identifier, wherein the physical downlink control channel is scrambled by using the first radio network temporary identifier.

15. The method according to claim 14, wherein the monitoring the physical downlink control channel comprises:
starting to monitor the physical downlink control channel at a third moment after transmission of the uplink data ends, wherein
an interval between the third moment and time at which the transmission of the uplink data ends is a first quantity of unit time.

16. The method according to claim 14 or 15, wherein the first configuration information further comprises response window configuration information, and the response window configuration information indicates duration of a response window; and
the monitoring the physical downlink control channel comprises:
monitoring the physical downlink control channel in the response window.

17. The method according to claim 16, wherein the method further comprises:
transmitting the uplink data in the second transmission manner after the response window expires.

18. The method according to any one of claims 14 to 17, wherein the method further comprises:
receiving first indication information, wherein the first indication information indicates to transmit the uplink data in the second transmission manner; and
stopping monitoring the physical downlink control channel.

19. The method according to any one of claims 1 to 18, wherein the first configuration information is carried in a broadcast message or a dedicated message, and the first time-frequency resource is a common time-frequency resource shared by different terminal devices.

20. A communication method, wherein the method is applied to an access network device, and the method comprises:
sending first configuration information, wherein the first configuration information indicates a first time-frequency resource; and
receiving uplink data that is from a terminal device, wherein the uplink data is carried on the first time-frequency resource, wherein
a location distance between a first location of the terminal device at a first moment and a second location corresponding to a serving cell is less than a first distance threshold, and/or a signal strength of the serving cell is greater than a first signal strength threshold, wherein the first moment is an arrival moment of the uplink data or first target time corresponding to the first time-frequency resource.

21. The method according to claim 20, wherein the second location is a location of the terminal device at a second moment or a location of a reference point corresponding to the serving cell, and the second moment is a moment at which the first configuration information is received.

22. The method according to claim 20 or 21, wherein the method further comprises:
sending service stop time of the serving cell.

23. The method according to any one of claims 20 to 22, wherein the method further comprises:
sending a transport block threshold, wherein
a size of the uplink data is less than the transport block threshold.

24. The method according to any one of claims 20 to 23, wherein the method further comprises:
sending first indication information to the terminal device, wherein the first indication information indicates to transmit the uplink data in a second transmission manner.

25. The method according to any one of claims 20 to 24, wherein the first configuration information is carried in a broadcast message or a dedicated message, and the first time-frequency resource is a common time-frequency resource shared by different terminal devices.

26. A communication apparatus, wherein the communication apparatus comprises a module configured to perform the method according to any one of claims 1 to 19, or comprises a module configured to perform the method according to any one of claims 20 to 25.

27. A communication apparatus, wherein the apparatus comprises a processor, configured to perform the method according to any one of claims 1 to 19, or configured to perform the method according to any one of claims 20 to 25.

28. A computer-readable storage medium, wherein the computer-readable storage medium comprises instructions, and when the instructions are run, the method according to any one of claims 1 to 19 is implemented, or the method according to any one of claims 20 to 25 is implemented.

29. A computer program product, wherein when the computer program product is executed, the method according to any one of claims 1 to 19 is implemented, or the method according to any one of claims 20 to 25 is implemented.

30. A chip system, wherein the chip system comprises one or more interface circuits and one or more processors, wherein
the interface circuit and the processor are interconnected through a line; and
the processor receives computer instructions from a memory of an electronic device through the interface circuit, and executes the computer instructions, to implement the method according to any one of claims 1 to 19 or the method according to any one of claims 20 to 25.

31. A communication system, comprising a terminal device and an access network device, wherein
the terminal device performs the method according to any one of claims 1 to 19; and
the access network device performs the method according to any one of claims 20 to 25.
